# EUROPEAN PATENT APPLICATION

(11) **EP 4 810 553 A2**
(43) Date of publication of application: **23.09.2026**
(21) Application number: 26189480.2
(22) Date of filing: 07.09.2023
(51) Int. Cl.: C08K 5/3415

(54) **CURABLE RESIN COMPOSITION**

(30) Priority: 07.09.2022 EP 22194299; 16.12.2022 EP 22214107
(62) Document number(s) of the earlier application(s) in accordance with Art. 76 EPC: 23768251.3 / 4 584 319
(71) Applicant: BASF SE, 67056 Ludwigshafen am Rhein (DE)
(72) Inventor: The designation of the inventor has not yet been filed
(74) Representative: Meissner Bolte Partnerschaft mbB

(57) **Abstract**

A curable resin composition comprises an ethylenically unsaturated resin and a reactive diluent, which is an N-vinyloxazolidinone of formula (I) 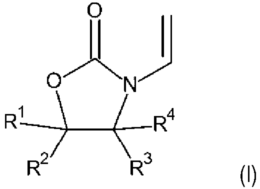 in which R¹, R², R³ and R⁴ are independently from one another selected from a hydrogen atom and an organic moiety comprising 1 to 10 carbon atoms. The reactive diluent is present in an amount of at least 0.5 wt-% relative to the total amount of reactive diluent and further reactive diluents. The ethylenically unsaturated resin is selected from an ethylenically unsaturated polyester resin, a vinyl ester resin, and combinations thereof.

## Description

The present invention relates to a composite glass fiber material comprising a thermosetting polymer, a method for producing a composite glass fiber material, the use of an N-vinyloxazolidinone in a process of obtaining a composite glass fiber material, and a curable resin composition.

Composite fiber materials comprise a fiber-reinforced polymer matrix, and are employed as, e.g., molded parts in a large number of applications including automotive construction and engineering. The polymer of the composite fiber materials is usually a thermosetting polymer, such as an epoxy, vinyl ester or polyester thermosetting polymer.

EP 3 626 759 A1 describes high-temperature unsaturated polyester (UP) resins based on cyclic and noncyclic raw materials and describes in detail the application of such resins in different fields.

The production of composite fiber materials comprising thermosetting polymers involves the curing of prepolymer resins. The prepolymer resins are suitably malleable or liquid prior to curing. In order to optimize rheology and thereby improve workability of the resins, at least one reactive diluent (thinner) is usually added to the resin. During the curing of the resin, the reactive diluent copolymerizes with the resin.

Reactive diluents are typically low-viscosity, mono-, bi- or polyfunctional monomers or oligomers. Examples of frequently used reactive diluents include styrene and styrene derivatives, vinyl ethers, acrylates and methacrylates, in particular styrene.

However, the use of the common reactive diluents has several disadvantages. For example, styrene derivatives may yield a high amount of residual monomers, vinyl ethers are susceptible to hydrolysis, methacrylates exhibit relatively low reactivity, and acrylates may induce tackiness in the obtained polymers. Moreover, in particular the use of styrene is considered problematic due to odor issues and concerns over its toxicity.

There is a need for further composite fiber materials obtained from reactive diluents which address at least some of the above-mentioned disadvantages.

The present invention provides a composite glass fiber material comprising a thermosetting polymer, wherein the thermosetting polymer is obtained from a curable resin composition comprising
(i) an ethylenically unsaturated resin; and
(ii) a reactive diluent, which is an N-vinyloxazolidinone of formula (I) 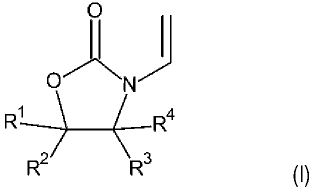 in which R¹, R², R³ and R⁴ are independently from one another selected from a hydrogen atom and an organic moiety comprising 1 to 10 carbon atoms;
   wherein the reactive diluent (ii) is present in an amount of at least 0.5 wt-% relative to the total amount of reactive diluent (ii) and further reactive diluents.

It was found that composite glass fiber materials comprising a thermosetting polymer may advantageously be obtained from curable resin compositions comprising the reactive diluent (ii). One particular advantage lies in the ability of N-vinyloxazolidinones of formula (I) to solubilize unsaturated resins having a relatively high polarity. Without wishing to be bound by theory, it is assumed that the high polarity of the N-vinyloxazolidinone of formula (I) renders these compounds highly compatible with relatively polar unsaturated resins. Moreover, and unlike for example styrene, the N-vinyloxazolidinones of formula (I) generally exhibit low toxicity and are virtually odorless, in particular 5-methyl-3-vinyl-oxazolidin-2-one.

In the N-vinyloxazolidinone of formula (I), moieties R¹, R², R³ and R⁴ are independently from one another selected from a hydrogen atom and an organic moiety comprising 1 to 10 carbon atoms. The organic moiety preferably comprises 1 to 8 carbon atoms, more preferably 1 to 6 carbon atoms, most preferably 1 to 4 carbon atoms, such as 1 to 3 carbon atoms. The organic moiety may comprise heteroatoms, such as oxygen, nitrogen and/or sulfur, in particular oxygen and/or nitrogen.

The organic moiety is preferably selected from a C₁-C₁₀ alkyl group and a C₁-C₁₀ alkoxy group, more preferably from a C₁-C₄ alkyl group and a C₁-C₄ alkoxy group, most preferably a C₁-C₄ alkyl group. Preferably, the organic moiety is selected from methyl, ethyl and propyl, more preferably from methyl and ethyl, most preferably methyl.

In a preferred embodiment, the N-vinyloxazolidinone of formula (I) is characterized in that
- at least two of R¹, R², R³ and R⁴ are a hydrogen atom, for example each of R¹, R², R³ and R⁴ is a hydrogen atom; or
- R¹ is a C₁-C₄ alkyl group, preferably methyl, and R², R³ and R⁴ are a hydrogen atom; or
- R⁴ is a C₁-C₄ alkyl group, preferably methyl, and R¹, R² and R³ are a hydrogen atom; or
- R¹ and R² are a hydrogen atom and R³ and R⁴ are a C₁-C₄ alkyl group, preferably methyl.

The synthesis of the N-vinyloxazolidinone compounds of formula (I) is well-known in the art. For example, N-vinyloxazolidinone compounds may be produced by pyrolyzing N-(1-hydroxyalkyl)-2-oxazolidinone in accordance with US 4,831,153. In particular, N-vinyloxazolidinone compounds may be synthesized by reacting acetylene with oxazolidinone compounds (so-called "Reppe Chemistry").

Preferred N-vinyloxazolidinones of formula (I) include 3-vinyloxazolidin-2-one (NVO) and vinyl methyl oxazolidinones such as 4-methyl-3-vinyl-oxazolidin-2-one (4-NVMO) and 5-methyl-3-vinyl-oxazolidin-2-one (5-NVMO), in particular 5-methyl-3-vinyl-oxazolidin-2-one.

Vinyl methyl oxazolidinones are commercially available. For example, VMOX^{®} from BASF SE comprises primarily 5-methyl-3-vinyl-oxazolidin-2-one, and further 4-methyl-3-vinyl-oxazolidin-2-one. In one embodiment, the vinyl methyl oxazolidinone comprises 5-methyl-3-vinyl-oxazolidin-2-one and at most 20 wt.-%, preferably at most 10 wt.-%, more preferably at most 5 wt.-% of 4-methyl-3-vinyl-oxazolidin-2-one, based on the total amount of vinyl methyl oxazolidinone, such as at most 1 wt.-% or at most 0.05 wt.-% of 4-methyl-3-vinyl-oxazolidin-2-one.

Preferably, the reactive diluent (ii) comprises a total amount of 3-vinyloxazolidin-2-one, 5-methyl-3-vinyl-oxazolidin-2-one and 4-methyl-3-vinyl-oxazolidin-2-one of at least 90 mol-%, more preferably at least 95 mol-%, most preferably at least 98 mol-%, relative to the total amount of the reactive diluent (ii). In a particularly preferred embodiment, the reactive diluent (ii) comprises an amount of 5-methyl-3-vinyl-oxazolidin-2-one and 4-methyl-3-vinyl-oxazolidin-2-one of at least 90 mol-%, more preferably at least 95 mol-%, most preferably at least 98 mol-%, relative to the total amount of the reactive diluent (ii).

The curable resin composition comprises an ethylenically unsaturated resin. The ethylenically unsaturated resin bears ethylenically unsaturated double bonds in its backbone. In this context, the term "ethylenically unsaturated" refers to a moiety which bears an olefinic CC=C-double bond which is not part of an aromatic ring and thus is susceptible to a radical polymerization. Typically, the ethylenically unsaturated double bond is present as a vinyl (-CH=CH-) double bond or a vinylidene (>C=CH₂) double bond.

The ethylenically unsaturated resin (i) is preferably selected from an ethylenically unsaturated polyester resin, a vinyl ester resin, and a urethane (meth)acrylate resin. In particular, the ethylenically unsaturated resin (i) is an ethylenically unsaturated polyester resin.

Ethylenically unsaturated polyester resins are obtainable by reacting (i-a) at least one unsaturated dicarboxylic acid, or an ester or an anhydride thereof, where the unsaturated dicarboxylic acid comprises at least one ethylenically unsaturated dicarboxylic acid; and (i-b) at least one polyol. Optionally, the monomers for forming the ethylenically unsaturated polyester resin may comprise a saturated dicarboxylic acid or an ester thereof. The ethylenically unsaturated polyester resin bears ethylenically unsaturated double bonds in its backbone which stem from the polymerized ethylenically unsaturated dicarboxylic acids of the component (i-a).

The term "ester" in the context of unsaturated dicarboxylic acids and saturated dicarboxylic acids may be any ester suitable for a polyester forming reaction. Typically the term "ester" means an alkyl ester, in particular a C₁-C₄-alkyl ester and especially a methyl or ethyl ester.

The unsaturated dicarboxylic acid may be at least one ethylenically unsaturated dicarboxylic acid, which means that it has at least one ethylenically unsaturated double bond as described herein. The unsaturated dicarboxylic acid may also be a combination of at least one ethylenically unsaturated dicarboxylic acid with one or more aromatic dicarboxylic acids. The unsaturated dicarboxylic acid preferably comprises at least 50 mol-%, in particular at least 80 mol-% of at least one ethylenically unsaturated dicarboxylic acid, based on the total amount of unsaturated dicarboxylic acids.

The skilled person will readily appreciate that in the formation of the ethylenically unsaturated polyester any dicarboxylic acid may also be used in the form of its ester or its anhydride.

The ethylenically unsaturated dicarboxylic acid comprises two carboxyl groups and at least one ethylenically unsaturated moiety, i.e. a moiety which bears an olefinic double bond that is not part of an aromatic ring and thus is susceptible to a radical polymerization. Typically, the ethylenically unsaturated double bond of the ethylenically unsaturated dicarboxylic acid is present as a vinyl (-CH=CH-) double bond or a vinylidene (>C=CH₂) double bond. The ethylenically unsaturated dicarboxylic acid may be straight-chained or branched. The ethylenically unsaturated dicarboxylic acid preferably comprises 4 to 8 carbon atoms, more preferably 4 to 7 carbon atoms, most preferably 4 or 5 carbon atoms.

Aromatic dicarboxylic acids suitable in combination with the at least one ethylenically unsaturated dicarboxylic acid preferably comprise 6 to 9, more preferably 6 to 8, most preferably 8 carbon atoms. Suitable aromatic dicarboxylic acids include phthalic acid, isophthalic acid and terephthalic acid.

The compound (i-a) is preferably selected from maleic acid, maleic anhydride, fumaric acid, fumaric acid dimethyl ester, itaconic acid, itaconic acid dimethyl ester, mesaconic acid, citraconic acid, and tetrahydrophthalic anhydride, or a combination of at least one of said compounds with at least one compound selected from phthalic acid, phthalic anhydride, isophthalic acid, terephthalic acid, dimethylterephthalate, 2,5-furane-dicarboxylic acid and 2,5-furanedicarboxylic-dimethylester. The compound (i-a) is more preferably selected from maleic acid, maleic anhydride, fumaric acid, itaconic acid and tetrahydrophthalic anhydride, most preferably from fumaric acid and maleic anhydride.

In one embodiment, the ethylenically unsaturated polyester resins may be obtained in the presence of saturated aliphatic dicarboxylic acids. Suitable saturated dicarboxylic acids are in particular aliphatic dicarboxylic acids, typically having 4 to 14 carbon atoms, such as succinic acid, glutaric acid, adipic acid, pimelic acid, suberic acid, azelaic acid, sebacinic acid and brassylic acid. Suitable saturated dicarboxylic acids also include cycloaliphatic dicarboxylic acids, typically having 6 to 14 carbon atoms, such as 1,2-, 1,3-, or 1,4-cyclohexane-dicarboxylic acid. Generally, the amount of saturated dicarboxylic acid will not exceed 50 mol-% of the total amount of dicarboxylic acids used in the reaction for forming the ethylenically unsaturated polyester, and preferably not exceed 20 mol-%.

The at least one polyol (i-b) is an organic compound comprising multiple hydroxyl groups. Preferably, the polyol (i-b) comprises 2 to 5 hydroxyl groups, more preferably 2 or 3 hydroxyl groups, most preferably 2 hydroxyl groups. The polyol (i-b) may be straight-chained or branched, preferably straight-chained. The polyol (i-b) may be saturated or unsaturated.

Suitable polyols include aliphatic polyols, such as glycols, i.e., aliphatic diols, like ethylene glycol, propylene glycol, diethylene glycol, 1,3-butanediol, 1,4-butanediol, 1,3-propanediol, dipropylene glycol and neopentyl glycol; triols such as glycerine; and aliphatic sugar alcohols such as sorbitol, xylitol and erythritol; as well as heterocyclic polyols, in particular heterocyclic polyols comprising at least one ring oxygen atom, such as maltitol or isosorbide. Glycols and heterocyclic polyols are particularly preferred.

An especially preferred polyol is isosorbide. Preferably, the polyol (i-b) comprises a total amount of isosorbide of at least 30 mol-%, more preferably at least 40 mol-%, most preferably at least 70 mol-%, such as at least 90 mol-% or at least 99 mol-%, relative to the total amount of the polyol (i-b).

The ethylenically unsaturated polyester resin (i) is preferably obtainable by reacting compounds (i-a) and (i-b) in a molar ratio in the range of 1.2 : 1 to 1 : 1.2, more preferably 1.1 : 1 to 1: 1.1, most preferably 1.05 : 1 to 1 : 1.05.

Alternatively, the ethylenically unsaturated resin (i) is a vinyl ester resin. Vinyl ester resins are obtainable by esterification of epoxy resins with (meth)acrylic acid. The term (meth)acrylic acid is herein understood to refer to both acrylic acid and methacrylic acid.

The epoxy resins that are used for preparing the vinyl ester resins are preferably polyglycidyl ethers which typically have on average 2 to 4 glycidyl groups per molecule and may also have 1 to 4 esterifiable hydroxyl groups. Preferred vinyl ester resins are aromatic vinyl ester resins. Preferred among these are the reaction products of aromatic polyglycidyl ethers, especially of those based on Novolak epoxy resins, such as epoxyphenol novolak (EPN) or epoxycresol novolak (ECN), or based on bisphenols such as bisphenol A or bisphenol F, with acrylic acid. In a typical embodiment, bisphenol A is reacted with epichlorohydrin to form the epoxide and then esterified with acrylic acid.

Particularly preferred are vinyl ester resins whose number-average molecular weight Mₙ is in the range from 500 to 4000 g/mol. Particularly preferred are aromatic vinyl ester resins which have on average 1.9 to 5, especially 2 to 4, acrylate groups.

Unlike ethylenically unsaturated polyester resins, vinyl ester resins comprise only terminal double bonds. The low number of double bonds allows for thermosetting polymers to be obtained from vinyl ester resins, which polymers exhibit comparatively low crosslinking densities and thus high impact strength, elongation at break and tensile strength. Moreover, thermosetting polymers obtained from vinyl ester resins exhibit fewer free chain ends than polymers obtained from ethylenically unsaturated polyester resins, thus being less susceptible to hydrolysis and more resistant to corrosion. Moreover, the glass transition of thermosetting polymers obtained from vinyl ester resins is much more focused than that of thermosetting polymers obtained from ethylenically unsaturated polyester resins.

Suitable commercially available vinyl ester resins include, in particular, the Laromer^{®} products LR8765 (aliphatic), LR8986, LR9019, LR9023, EA9081, EA9082, EA9097, EP9124, EA9138, EA9143 and EA9145, EA9148 from BASF SE; the AgiSyn^{®} products 1010, 1030, 2020, 3010, 3020, 3051, 9720, 9721, 9750, 9760, 9771, 9790, and 9792 from DSM Coating Resins B.V.; the Ebecryl^{®} products 113, 600, 604, 605, 608, 609, 640, 641, 648, 860, 1606, 1608, 3105, 3203, 3300, 3416, 3420, 3608, 3639, 3700, 3700, 3701, 3702, 3703, 3708, 3730, 3740, 5848, and 6040 from Allnex S.a.r.l.; the Etercure^{®} products 621, 621, 622, 622, 623, 623, 624, 624, 625, 923, 6209, 6210, 6211, 6213, 6215, 6219, 6231, 6233, 6233, 6234, 6235, 6241, 6261, and 620 from Eternal Chemical Co. Ltd.; the Photomer^{®} products 3005, 3015, 3016, 3072, 3316, 3317, 3620, and 3660 from IGM; the Miramer^{®} and Photocryl^{®} products Miramer PE 110 H, Photocryl E 202, Photocryl E 203 /30PE, Photocryl E 207 /25TP, Photocryl E 207 /30PE, Photocryl E 07 /25HD, Miramer PE 210, Miramer PE 210 HA, Miramer PE 230, Miramer PE 250, Miramer PE 250 LS, Photocryl DP 296, Miramer PE 310, Photocryl DP 460, Miramer PE 2100, Miramer PE 2120 A, Miramer PE 2120 C, Miramer PE 2120 B, Miramer PE 130, Miramer ME 2500, Miramer SC 6345, and Miramer SC 6400 from Miwon Specialty Chemical Co., Ltd.; the Genomer^{®} products 2235, 2253, 2255, 2259, 2263, and 2280 from Rahn AG; the Sartomer^{®} CN and Kyrarad^{®} products Sartomer CN 104 Y50, Sartomer CN 108, Sartomer CN 109, Sartomer CNUVE 110 /95, Sartomer CN 111, Sartomer CN 112 B70, Sartomer CN 12 C60, Sartomer CN 113 D70, Sartomer CNUVE 114 /95, Sartomer CN 115, Sartomer CN 116, Sartomer CN 116 D50, Sartomer CN 117, Sartomer CN 118, Sartomer CN 119, Sartomer CN 120, Sartomer CN 120 A75, Sartomer CN 120 A80, Sartomer CN 120 B60, Sartomer CN 120 B80, Sartomer CN 120 C60, Sartomer CN 120 C80, Sartomer CN 120 D80, Sartomer CN 120 E50, Sartomer CN 120 J90, Sartomer CN 120 M50, Sartomer CN 120 S80, Sartomer CN 121, Sartomer CN 122 A80, Sartomer CN 124, Sartomer CN 129, Sartomer CNUVE 130, Sartomer CN 131 B, Sartomer CN 132, Sartomer CN 133, Sartomer CN 136, Sartomer CN 148, Sartomer CNUVE 150/80, Sartomer CN 151, Sartomer CNUVE 151, Sartomer CN 152, Sartomer CN 56, Sartomer CN 159, Sartomer CN 173, Sartomer CN 186, Kayarad R 190, Kayarad R 205, Kayarad TCR 1094, Kayarad TCR 1096, Sartomer CN 1300, Sartomer CN 2003 EU, Kayarad EAM 2160, and Kayarad EAM 2300 from Sartomer, and the Qualicure^{®} GU products GU1160C, GU1200W, GU1280A, GU1380A, GU1400Z, GU1475A, GU1480A, GU1600Y, GU1650X, GU1700W, GU1700P, GU1700T, GU1700Y, GU1700Z, GU1800W, GU1900W, and GU1900Z from Qualipoly Chemical Corporation, the aforementioned products in some cases being blends with monomers.

Alternatively, the ethylenically unsaturated resin (i) is a urethane (meth)acrylate resin. Urethane (meth)acrylates are obtainable by reacting aromatic or aliphatic di- or oligoisocyanates with hydroxyalkyl (meth)acrylates, such as hydroxyethyl (meth)acrylate or hydroxypropyl (meth)acrylate, and optionally saturated polyols, selected from aliphatic polyols, cycloaliphatic polyols, polyetherols, polyesterols, polyetheresterols and polycarbonate diols.

Suitable commercially available urethane (meth)acrylate resins include are urethane (meth)acrylates, more particularly oligomers and polymers containing urethane groups, having on average 1.8 to 10, more particularly 1.9 to 8.5 (meth)acrylate groups, and being obtainable preferably by reaction of aromatic or aliphatic di- or oligoisocyanates with hydroxyalkyl (meth)acrylates. Examples thereof are the Laromer^{®} products UA19T, UA9028, UA9030, UA8987, UA9029, UA9033, UA9047, UA9048, UA9050, UA9072, UA9065, UA9089, UA9073, and UA9136 from BASF SE; the Neorad^{®} U products 10, 20, 25, 42, 60, 61, 6282, and 6288 from DSM Coating Resins B.V.; the AgiSyn^{®} products 230, 236, 250, and 670 from DSM Coating Resins B.V.; the Ebecryl^{®} products 204, 205, 206, 210, 214, 215, 220, 221, 230, 244, 245, 246, 264, 265, 267, 270, 271, 280, 284, 285, 286, 294, 1258, 1290, 1290, 1291, 2002, 2003, 2221, 4101, 4150, 4201, 4220, 4250, 4265, 4396, 4491, 4501, 4510, 4513, 4587, 4654, 4666, 4680, 4683, 4740, 4765, 4820, 4858, 4859, 5021, 5129, 6202, 8100, 8110, 8210, 8213, 8215, 8232, 8254, 8296, 8301, 8307, 8310, 8311, 8402, 8405, 8413, 8415, 8465, and 8602 from Allnex S.a.r.l.; Etercure^{®} products 611, 615, 6072, 6081, 6101, 6112, 6113, 6114, 6115, 6120, 6121, 6122, 6123, 6127, 6130, 6131, 6134, 6141, 6142, 6143, 6144, 6145, 6145, 6146, 6147, 6148, 6148, 6149, 6150, 6151, 6152, 6153, 6153, 6154, 6154, 6157, 6158, 6160, 6161, 6164, 6165, 6170, 6171, 6172, 6175, 6175, 6175, 6176, 6181, 6195, 6196, 6197, 6198, 8000, Etercure DR-U 6-1, Etercure DR-U 10, Etercure DR-U 11, Etercure DR-U 20, Etercure DR-U 21, Etercure DR-U 22, Etercure DR-U 24, Etercure DR-U 25, Etercure DR-U 26, Etercure DR-U 57, Etercure DR-U 91, Etercure DR-U 92, Etercure DR-U 95, Etercure DR-U 106, Etercure DR-U 116, Etercure DR-U 300, Etercure DR-U 301 from Eternal Chemical Co. Ltd.; the Photomer^{®} products 6008, 6009, 6010, 6019, 6184, 6210, 6230, 6625, 6628, 6690, 6720, 6891, 6892, and 6893 from IGM Resins B.V., the Miramer^{®} products 256, 307, 320, 340, 360, 375, 610, 620, 622, 662, 664, 2012, 2030, 2100, 2152, 2200, 2404, 2410, 2421, 2510, 2560, 2564, 2565, 2900, 3100, 3195, 3201, 3280, 3304, 3400, 3420, 3440, 3450, 3600, 3603, 3701, 3710, 3722, 4100, 4150, 5000, 5216, 6140, and 9800 from Miwon Specialty Chemical Co., Ltd.; the Genomer^{®} products 1122, 4188, 4205, 4215, 4217, 4256, 4267, 4269, 4297, 4302, 4312, 4316, 4425, 4590, and 4622 from Rahn AG; the Sartomer^{®} CN products 902, 910, 914, 916, 922, 925, 929, 936, 944, 945, 945, 945, 956, 959, 961, 961, 962, 963, 963, 963, 963, 963, 964, 965, 966, 967, 968, 970, 971, 972, 973, 975, 976, 977, 978, 980, 981, 982, 983, 984, 985, 989, 990, 991, 992, 994, 996, 997, 998, 999, 1963, 3000, 3001, 8000, 8001, 8002, 8003, 9001, 9002, 9004, 9007, 9010, 9014, 9026, 9101, 9102, 9130, 9143, 9165, 9167, 9170, 9196, 9200, 9245, 9245, 9250, 9251, 9260, 9276, 9278, 9293, 9761, 9782, 9783, 9788, 9800, and 9893 from Sartomer; the Qualicure^{®} GU products GU3001Z, GU3010Z, GU3030Z, GU3100W, GU3100Y, GU3100Z, GU3185A, GU3185B, GU3285A, GU3290M, GU3300W, GU3300Z, GU3370A, GU3400Y, GU3400Z, GU3501Q, GU4000Y, GU4075B, GU4100Y, GU4175X, GU4200Z, GU4280B, GU4300Y, GU4500Y, GU6100L, GU6200Y, GU6200Z, GU6300Y, GU6370F, GU7200Z, GU7400Z, GU7500Z, GU3680A, GU3700Y, GU3701W, GU3775A, GU3980A, GU4660A, GU4900Y, GU6600Y, and GU7900Z and the Qualicure^{®} GS products GS4920C and GS5120C from Qualipoly Chemical Corporation, the aforementioned products in some cases being blends with monomers. Preferred among these aliphatic urethane acrylates. Particularly preferred are aliphatic urethane (meth)acrylates whose number-average molecular weight Mₙ is in the range from 500 to 4,000 g/mol.

Suitable aliphatic polyols include ethylene glycol, diethylene glycol, triethylene glycol, propylene glycol, dipropylene glycol, tripropylene glycol, 1,4-butanediol and polytetrahydrofuran.

Suitable polyesterols may be derived from adipic acid and a polyol selected from ethylene glycol, propylene glycol, 1,4-butanediol, 1,4-hexanediol, diethylene glycol and dipropylene glycol.

Suitable polycarbonate diols include polycarbonates based on 1,5-pentanediol and 1,6-hexanediol.

In one embodiment, the ethylenically unsaturated resin (i) has at least one of the following features:
- a number average molecular weight (Mₙ), as determined by gel permeation chromatography, in the range of 500 to 10,000 g/mol;
- an acid value in the range of 5 to 80 mg KOH/g; and
- a hydroxyl value in the range of 5 to 80 mg KOH/g.

Preferably, the ethylenically unsaturated resin (i) has at least one of the following features:
- a number average molecular weight (Mₙ), as determined by gel permeation chromatography, in the range of 800 to 8,000 g/mol, preferably 1,000 to 5,000 g/mol;
- an acid value in the range of 10 to 65 mg KOH/g, preferably 15 to 55 mg KOH/g; and
- a hydroxyl value in the range 10 to 65 mg KOH/g, preferably 15 to 55 mg KOH/g .

The acid value (neutralization number) is the amount of potassium hydroxide (KOH) in milligrams required to neutralize one gram of the ethylenically unsaturated resin. The acid value indicates the number of carboxylic acid groups per gram of compound and may be determined via DIN EN ISO 2114. The acid value is particularly relevant with regard to the characterization of ethylenically unsaturated polyester resins.

The hydroxyl value is the amount of potassium hydroxide (KOH) in milligrams required to neutralize the acetic acid taken up on acetylation of one gram of a chemical substance containing free hydroxyl groups. The hydroxyl value indicates the number of free hydroxyl group per gram of compound and may be determined via DIN EN ISO 4692-2.

In a further embodiment, the ethylenically unsaturated resin (i) has an ethylene group density in the range of 0.5 to 10 mol/kg, in particular in the range of
- 2.0 to 9.0 mol/kg, such as 4.0 to 7.5 mol/kg, when the ethylenically unsaturated resin (i) is an ethylenically unsaturated polyester resin;
- 1.0 to 4.5 mol/kg, such as 2.5 to 4.5 mol/kg, when the ethylenically unsaturated resin (i) is a vinyl ester resin;
- 1.0 to 5.0 mol/kg, such as 3.0 to 5.0 mol/kg, when the ethylenically unsaturated resin (i) is a urethane (meth)acrylate resin.

The ethylene group density signifies the molar proportion of ethylene groups per kg of resin. The ethylene group density may be determined via nuclear magnetic resonance (NMR) spectroscopy.

It was found that N-vinyloxazolidinones of formula (I) are especially suitable for solubilizing ethylenically unsaturated resins (i) having a Hansen solubility parameter δₚ of at least 5.5 MPa^{1/2}. This in particular applicable when the ethylenically unsaturated resin is an ethylenically unsaturated polyester resin. The Hansen solubility parameter δₚ indicates the energy from dipolar intermolecular force between molecules. Without wishing to be bound by theory, it is assumed that the high polarity of the N-vinyloxazolidinones of formula (I) renders these compounds highly compatible with relatively polar unsaturated resins, which is reflected in a relatively high Hansen solubility parameter δₚ of these unsaturated resins.

The definition and calculation of solubility parameters in the three dimensional Hansen solubility space are described in C. M. Hansen: "The Three Dimensional Solubility parameter and Solvent Diffusion Coefficient - Their Importance in Surface Coating Formulation", Danish Technical Press, Copenhagen, 1967.

As mentioned above, δₚ denotes the energy from dipolar intermolecular force between molecules, while δ_{d} denotes the energy from dispersion forces between molecules, and δₙ denotes the energy from hydrogen bonds between molecules. The unit of the Hansen solubility parameters of the parameters is MPa^{1/2}.

Hansen solubility parameters for many compounds are tabulated in standard works, such as "Hansen Solubility Parameters: A User's Handbook", C. M. Hansen, 2007, 2nd Edition, CRC. Well-known modeling software, such as HSPIP 3.1.25 (3rd Edition), developed and distributed by C. M. Hansen, or COSMOquick 2021 can also be used to calculate Hansen solubility parameters based on the chemical structure of the compound. The Hansen solubility parameters are calculated assuming room temperature, approximately 25 °C. Herein, the Hansen solubility parameters, in particular δₚ, are calculated according to the method described for the working examples below.

If the Hansen solubility parameter δₚ is below the claimed value, the solubility of the ethylenically unsaturated resins (i) in the N-vinyloxazolidinones of formula (I) may be insufficient, and the advantageous properties of the reactive diluent (ii) are less pronounced. It was moreover found that the known reactive thinner styrene does not reliably provide sufficient solubility for ethylenically unsaturated resins (i) having a Hansen solubility parameter δₚ of at least 5.5 MPa^{1/2}.

In one embodiment, the ethylenically unsaturated resin (i) is characterized by a Hansen solubility parameter δₚ of at least 5.7 MPa^{1/2}, such as at least 6.0 MPa^{1/2}, or at least 6.3 MPa^{1/2}, more preferably at least 6.5 MPa^{1/2}, in particular at least 7.0 MPa^{1/2}, most preferably at least 8.0 MPa^{1/2}. The Hansen solubility parameter δₚ is preferably at most 16 MPa^{1/2}, more preferably at most 12 MPa^{1/2}, most preferably at most 8.5 MPa^{1/2}.

In a further embodiment, the ethylenically unsaturated resin (i) is characterized by a Hansen solubility parameter δ_{d} of at least 15.0 MPa^{1/2}, preferably at least 17.0 MPa^{1/2}, more preferably at least 17.5 MPa^{1/2}, most preferably at least 18.0 MPa^{1/2}, such as at least 18.5 MPa^{1/2}. The Hansen solubility parameter δ_{d} is preferably at most 22.0 MPa^{1/2}, more preferably at most 20.5 MPa^{1/2}, most preferably at most 19.5 MPa^{1/2}.

In a further embodiment, the ethylenically unsaturated resin (i) is characterized by a Hansen solubility parameter δₕ of at least 15.0 MPa^{1/2}, preferably at least 15.5 MPa^{1/2}, more preferably at least 16.0 MPa^{1/2}, most preferably at least 17.0 MPa^{1/2}. The Hansen solubility parameter δₙ is preferably at most 30.0 MPa^{1/2}, more preferably at most 24.0 MPa^{1/2}, most preferably at most 18.0 MPa^{1/2}.

In one embodiment, the ethylenically unsaturated resin (i) is characterized by
- a Hansen solubility parameter δₚ of at least 5.5 MPa^{1/2}, preferably at least 5.7 MPa^{1/2}, such as at least 6.0 MPa^{1/2}, or at least 6.3 MPa^{1/2}, more preferably at least 6.5 MPa^{1/2}, in particular at least 7.0 MPa^{1/2}, most preferably at least 8.0 MPa^{1/2}, and
- a Hansen solubility parameter δ_{d} of at least 15.0 MPa^{1/2}, preferably at least 17.0 MPa^{1/2}, more preferably at least 17.5 MPa^{1/2}, most preferably at least 18.0 MPa^{1/2}, such as at least 18.5 MPa^{1/2}.

The above-mentioned upper limits are preferred.

In a further embodiment, the ethylenically unsaturated resin (i) is characterized by
- a Hansen solubility parameter δₚ of at least 5.5 MPa^{1/2}, preferably at least 5.7 MPa^{1/2}, such as at least 6.0 MPa^{1/2}, or at least 6.3 MPa^{1/2}, more preferably at least 6.5 MPa^{1/2}, in particular at least 7.0 MPa^{1/2}, most preferably at least 8.0 MPa^{1/2};
- a Hansen solubility parameter δ_{d} of at least 15.0 MPa^{1/2}, preferably at least 17.0 MPa^{1/2}, more preferably at least 17.5 MPa^{1/2}, most preferably at least 18.0 MPa^{1/2}, such as at least 18.5 MPa^{1/2}; and
- a Hansen solubility parameter δₙ of at least 15.0 MPa^{1/2}, preferably at least 15.5 MPa^{1/2}, more preferably at least 16.0 MPa^{1/2}, most preferably at least 17.0 MPa^{1/2}.

The above-mentioned upper limits are preferred.

The parameters δₚ, δ_{d} and δₕ can be considered as coordinates for a point in three dimensions also known as the Hansen space. The closer two molecules are in Hansen space, the more likely they are to dissolve into each other. In order to determine whether the parameters of two molecules, typically a solvent and a polymer, are within range, an interaction radius (or R₀ value) is attributed, generally to the substance to be dissolved. The R₀ value determines the radius of the sphere in Hansen space. All suitable solvents are located within the sphere, while unsuitable solvents are located outside the sphere.

The interaction radius R₀ is defined by the greatest distance Rₐ value at which a substance is solubilized. The distance Rₐ is calculated from the Hansen solubility parameters of the substances under consideration. Subsequently, experimental solubility tests are performed. The results are correlated with the theoretical calculations of the Rₐ parameters. The value of Rₐ may be calculated by the following formula: $Ra = \sqrt{4 ⋅ {\left({δ}_{D 1}-{δ}_{D 2}\right)}^{2} + {\left({δ}_{P 1}-{δ}_{P 2}\right)}^{2} + {\left({δ}_{H 1}-{δ}_{H 2}\right)}^{2}}$

A detailed discussion on how to determine Rₐ and R₀ values may be found in "Hansen Solubility Parameters: A User's Handbook", C. M. Hansen, 2007, 2nd Edition, CRC.

From the Rₐ and the R₀ value, the relative energy density (RED) is calculated according to RED = Rₐ/R₀. If the RED value is less than 1, the substances will dissolve. If the RED value is 1, the substances will partially dissolve. If the RED value is greater than 1, the substances will not dissolve.

For example, styrene has an experimentally determined R₀ value of 12.65. This means that if the Rₐ value calculated from the Hansen parameters of styrene and, e.g., a specific resin, is above 12.65, the RED value will be above 1, and the substance is insoluble in styrene.

In one embodiment, the ethylenically unsaturated resin (i) is characterized by an Rₐ value of greater than 12.65, preferably greater than 12.70 or greater than 12.80, relative to styrene.

If the Hansen solubility parameter values of individual substances are known, the Hansen solubility parameter values of mixtures can be calculated. Each parameter is calculated individually by adding the parameters of both substances according to the volume ratio: ${δ}_{M} = {φ}_{1} ∗ {δ}_{1} + {φ}_{2} ∗ {δ}_{2}$ wherein φ₁ is the volume fraction of substance 1, φ₂ is the volume fraction of substance 2, δ₁ is the Hansen solubility parameter (δ_{d}, δₚ or δₕ) of substance 1 and δ₂ is the Hansen solubility parameter (δ_{d}, δₚ or δₕ) of substance 2. There is an optimal ratio of solvents (with the smallest distance Rₐ) for a given substance. Even two (or more) substances which are typically unsuitable for solving a compound can become suitable solvents in certain ratios, since the mixture can lie within the solubility sphere R₀.

The curable resin composition preferably comprises the ethylenically unsaturated resin (i) in an amount of 15 to 85 wt.-% based on the total weight of the curable resin composition, more preferably 15 to 75 wt.-%, most preferably 20 to 60 wt.-%.

The curable resin composition preferably comprises the reactive diluent (ii) in an amount of 0.5 to 85 wt.-%, based on the total weight of the curable resin composition, for example 3 to 85 wt.-% or 5 to 85 wt.-%, preferably 10 to 80 wt.-%, more preferably 15 to 80 wt.-%, such as 20 to 80 wt.-%, even more preferably 25 to 80 wt.-%, most preferably 40 to 80 wt.-%, for example 50 to 75 wt.-%.

Besides the reactive diluent (ii), the curable resin composition may comprise one or more further reactive diluents selected from styrene and styrene derivatives, epoxides, vinyl ethers, acrylates and methacrylates. In this case, the reactive diluent (ii) acts as a solubility enhancer. Styrene derivatives include 3-methyl styrene, 4-methyl styrene, 4-tert-butyl styrene and alpha-methyl styrene. Suitable acrylates include methyl methacrylate, tert-butyl acrylate, cyclohexyl acrylate, 4-tert-butyl-cyclohexyl acrylate, dimethyl itaconate (DMI), methyl cinnamate, ethyl cinnamate, 2-hydroxyethyl methacrylate, 3-hydroxypropyl methacrylate, isobornyl acrylate, isobornyl methacrylate, 1,4-butanediol dimethacrylate (1,4-BDDMA), triethyleneglycol dimethylacrylate, trimethylolpropane trimethacrylate, and aceto acetoxy ethyl methacrylate (AAEMA). Suitable vinyl ethers include cyclohexyl vinyl ether, diethyleneglycol divinylether, triethyleneglycol divinyl ether, cyclohexane-1,4-dimethanol divinylether and 1,4-butanediol divinyl ether. Suitable epoxides include 2,2-bis[4-(glycidyloxy)phenyl]propane, bis-[4-(glycidyloxy)-phenyl]methane and 1,4-bis(2,3-epoxypropyloxy) butane.

In order to achieve the high solubilization of the ethylenically unsaturated resin (i), the reactive diluent (ii) is present in an amount of at least 0.5 wt-% relative to the total amount of reactive diluent (ii) and further reactive diluents, preferably at least 5 wt.-%, more preferably at least 10 wt.-%, such as at least 25 wt.-%, at least 40 wt.-%, at least 50 wt.-%, at least 60 wt.-% or at least 75 wt.-%.

Preferably, the weight ratio of the ethylenically unsaturated resin (i) to the total amount of reactive diluents in the curable resin composition is in the range of 15 : 85 to 85 : 15, more preferably in the range of 25 : 75 to 75 : 25, in particular 30 : 70 to 70 : 30 or 30 : 70 to 60 : 40.

In one embodiment, the ethylenically unsaturated polyester resin composition does not comprise a further reactive diluent.

In one embodiment, the composite glass fiber material comprises the thermosetting polymer in an amount in the range of 10 to 90 % wt.-%, preferably 15 to 85 % wt.-%, more preferably 20 to 80 % wt.-%, based on the total weight of the material.

The composite glass fiber material comprises glass fibers. Fibers enhance the mechanical properties and mechanical stability of the composite glass fiber material. Glass fiber is a material consisting of numerous extremely fine fibers of glass and is formed by extruding thin strands of glass, such as silica-based glass. It has been found that using an N-vinyloxazolidinone of formula (I) as a reactive diluent for obtaining composite glass fiber materials increases the impact strength of these materials as compared to known reactive diluents such as styrene.

For every 100 parts by weight of ethylenically unsaturated resin (i) and the total amount of reactive diluents, there are preferably 10 to 220 parts by weight of glass fibers, more preferably 15 to 200 parts by weight of glass fibers, most preferably 25 to 180 parts by weight of glass fibers. An amount of glass fibers in this range allows for achieving useful physical properties of the composite glass fiber material.

Besides glass fibers, the material may comprise fibers selected from carbon fibers, ceramic fibers, aramid fibers, boron fibers, basalt fibers, steel fibers, natural fibers and/or nylon fibers.

For every 100 parts by weight of ethylenically unsaturated resin (i) and the total amount of reactive diluents, there are preferably 10 to 220 parts by weight of fibers, more preferably 15 to 200 parts by weight of fibers, most preferably 25 to 180 parts by weight of fibers.

The glass fibers, as well as the optional further fibers discussed above, may be characterized by their length-to-diameter ratio (aspect ratio). A fiber is understood to be a material having a length-to-diameter ratio of at least 10, in particular at least 20, more particularly at least 50 or at least 100, and also comprise fibers modified, e.g., by spinning. In a preferred embodiment, the fibers have a length-to-diameter ratio in the range of 20 to 100000, preferably 50 to 100000, most preferably 100 to 100000. The length and diameter of fibers may be determined via a suitable microscope.

The length of suitable glass fibers is typically in the range of 1 mm to 1 m, preferably 2 mm to 1m, most preferably 3 mm to 1 m. The diameter of suitable glass fibers is typically in the range of 6 to 25 µm, preferably 10 to 25 µm, most preferably 12 to 25 µm.

The glass fibers may be present in the material as individual glass fibers, as meshes, fabrics, including knitted and woven fabrics, non-crimp fabrics scrims, rovings and the like.

The composition may comprise further components, including stabilizers; inhibitors; pigments and dyes; fillers; thickening agents; flame retardants; biocides; thermoplastic shrink control agents; toughening agents; curing agents; waxes and other film forming agents; lubricants; mold release agents; wetting agents; deaeration agents; and/or coupling agents.

In particular, the composition may comprise at least one stabilizer or a mixture of stabilizers. Suitable stabilizers include nitroxyl compounds, such as 1-oxyl-2,2,6,6-tetramethylpiperidine or 4-hydroxy-1-oxyl-2,2,6,6-tetramethylpiperidine. Moreover, phenol derivatives having at least one substituent in the alpha-position to the phenol group are suitable, such as 2,6-di-tert-butyl-4-methylphenol, Irganox^{®} 1330 or Irganox^{®} 3114, and tocopherols. Further suitable stabilizers include aromatic amines and phenylenediamines, hindered amines such as Tinuvin^{®} NOR^{®} 356, Tinuvin^{®} 765, and Tinuvin^{®} 770, imines, sulfonamides, oximes, hydroxylamines, urea derivatives, phosphorus-containing compounds, sulfur-containing compounds such as phenothiazine, complexing agents based on tetraazaannulene (TAA) and/or metal salts. Phosphorus-containing compounds are, for example, triphenylphosphine, triphenylphosphite, hypophosphorous acid, phosphorous acid, trinonyl phosphite, triethyl phosphite and diphenylisopropylphosphine.

Suitably, the ethylenically unsaturated resin composition comprises a total amount of stabilizers in the range of 0.01 to 5 wt.-%, preferably 0.02 to 3_wt.-%, more preferably 0.025 to 2.5 wt.-%, relative to the total amount of the ethylenically unsaturated resin composition.

Suitable inhibitors include hydroquinone, 2-methylhydroquinone, 2-tertbutyl-hydroquinone, p-benzoquinone, 2-methyl-p-benzoquinone, 2-tert-butyl-p-benzoquinone, 1,4-naphthoquinone, 4-tert-butyl-catechine (TBC), 1,2-dihydroxynaphthalene, 1,4-dihydroxynaphthalene, N-nitroso-N-phenylhydroxylamine ammonium salt and tris(N-nitroso-N-phenylhydroxyl-aminato)aluminium.

Suitable pigments and dyes are materials that change the color of reflected or transmitted light as the result of wavelength-selective absorption. An example of a pigment is titanium dioxide.

Fillers are inert compounds enhancing the volume of the unsaturated polyester resin composition. For every 100 parts by weight of a mixture of unsaturated resin (i) and reactive diluent (ii), there are preferably 20 to 280 parts by weight fillers present in the unsaturated polyester resin composition. An example of a filler is calcium carbonate.

Thickening agents increase the viscosity of the unsaturated polyester resin composition and reduce its tackiness, thus improving the handling of the composition. Examples of thickening agents are isocyanates such as 4,4'-methylene-diphenyl-diisocyanate, magnesium oxide (MgO), Calciumhydroxide (Ca(OH)₂) and Calciumoxide (CaO).

Flame retardants are substances which prevent or slow ignition development. Suitable flame retardants include solid flame retardants such as alumina trihydrate (ATH), magnesium hydroxide (Mg(OH)₂) and ammonium polyphosphate (APP). Other suitable flame retardants include triphenylphosphate, resorcinol tetraphenyldiphosphate, bisphenol A tetraphenyldiphosphate, decabromdiphenylethane, ethylene-bis-(tetra-bromophthalimide), tris(tribromophenyl)cyanurate, and/or dodecachloropentacyclo-octadecadiene (Dechlorane Plus^{®}). Further, halogenated flame retardants may be used combination with synergists like antimony trioxide (Sb₂O₃) or 2,3-dimethyl-2,3-diphenyl-butane (Dicumene^{®}).

A biocide is a substance which destroys, deters, renders harmless, or exerts a controlling effect on any harmful organism by chemical or biological means. Suitable biocides include substances based on silver, copper or zinc, which are supplied as salts (zinc pyrithione) or oxides or by loaded zeolites or by nano particles. Further suitable biocides include chitosan, 10,10'-oxybisdphenoxarsine (OBPA), isothiazolinones, 2,4,4'-trichlor-2'-hydroxy-diphenylether (Trichlosan), N-(fluorodichloro-methylthio) phthalimide, thiabendazole (TBZ) or methylthio-cyclopropylamino-tert-butylamino-sym-triazine and synthetic polymers poly(tert-butylaminoethylmethacrylate), poly(tert-butylaminomethylstyrene) and their active copolymers.

Thermoplastic shrink control agents are substances that can be used in sheet molding compound (SMC) and in bulk molding compound (BMC) technology in order to compensate for shrink by forming micro voids in the thermoplastic phase during cure. Suitable thermoplastic shrink control agents include solid polymers such as powdered polyethylene and liquid solutions in styrene made from thermoplastic polymers such as polystyrene and styrene copolymers, polymethylmethacrylate (PMMA), polyvinylacetate (PVAc) and functionalized PVAc, saturated (non-curable) polyesters and rubbers.

Toughening agents are used to improve the damage tolerance of the cured ethylenically unsaturated polyester resin composition. In particular, the elongation at break and the impact strength can be enhanced, while crack formation under long term static load and dynamic load can be reduced. Suitable toughening agents include rubbers, nanoparticles, i.e. particles having an average diameter of less than 1 µm or precursors forming such nanoparticles, thermoplastic polymers differing from the ethylenically unsaturated resin (i) and blockcopolymers differing from the ethylenically unsaturated resin (i). Toughening agents may be present in the resin composition in an amount of 2 to 40 wt.%, preferably 3 to 30 wt.%, more preferably 5 to 25 wt.%, relative to the total amount of the curable resin composition.

Suitable rubbers include acrylonitrile-butadiene-rubber (NBR), hydrogenated NBR (H-NBR), polychloroprene (CR), styrene-butadiene-rubber (SBR), natural rubber (NR), polyisobutylene (PIB), ethylene-propylene-rubber (EPM), ethylene-propylene-diene-rubber (EPDM) and rubbers based on polyacrylates, acrylate-rubber (AM) and fluororubber and functionalized rubber like carboxy-terminated NBR (CTBN) or epoxy-terminated NBR (ETBN).

Suitable nanoparticles include soot, carbon black (high abrasion furnace, super high abrasion furnace), pyrogenic silicic acid, surface-modified pyrogenic silicic acid, fumed silica, precipitated silica, rigid phase material from polyurethane recycling, modified silica particles by hydrolysis of functionalized silanes, montmorillonite, bentonite and exfoliated montmorillonite.

Suitable thermoplastic polymers differing from the ethylenically unsaturated resin (i) include polysulfone (PSU), polyethersulfone (PES), polyphenylenesulfone (PPSU), polyoxy-2,6-dimethyl-1,4-phenylene (PPE), polycarbonate based on bisphenol A and bisphenol TMC (APEC HT^{®}), copolymers of styrene and maleic anhydride (XIRAN^{®}), copolymers of styrene and maleic anhydride and N-phenyl-maleinimide (XIRAN^{®}), copolymers from styrene and glycidylmethacrylate, copolymer from styrene and acrylonitrile (SAN), copolymer from styrene, butadiene and acrylonitrile (ABS), copolymer from styrene, acrylate monomer and acrylonitrile (ASA), copolymers from acrylonitrile and α-methyl-styrene (AMSAN), amorphous polyamides, polymethacrylimide, polyvinylidenefluoride (PVDF), polyvinylfluoride (PVF), ethylene-tetrafluoroethylene-copolymer (ETFE) and copolymer from tetrafluoroethylene and hexafluoropropylene.

Suitable blockcopolymers differing from the ethylenically unsaturated polyester resin (i) include styrene-butadiene-styrene blockcopolymers (SBS), polyetheramide blockcopolymers, polyetherester blockcopolymers, thermoplastic polyurethanes (TPU) on the basis of polyesters, polyethers and polycarbonates.

A curing agent is a compound or a mixture of compounds which expedites the curing process.

When curing is conducted at a temperature of between 5 and 45 °C, it may be referred to as "cold curing". Cold curing may be conducted via benzoylperoxides in combination with an amine accelerator; or via hydroperoxides in combination with a metal accelerator.

Suitable benzoylperoxides include dibenzoyl peroxide and 4,4'-dichloro-dibenzoyl peroxide. Suitable amine accelerators include N,N-dimethylaniline, N,N-diethylaniline, N,N-dimethyltolidine, N,N-diethyltolidine, N,N-bis(2-hydroxyethyl)aniline, N,N-bis(2-hydroxyethyl)-tolidine, N,N-bis(2-hydroxypropyl)-aniline, and/or N,N-bis(2-hydroxypropyl)toluidine.

Suitable hydroperoxides include hydrogen peroxide, tert-butylhydroperoxide, tert-amylhydroperoxide, methylethylketone-peroxide, cyclohexanone-peroxide, acetylaceton-peroxide, trimethylcyclohexanon-peroxid, iso-butylmethylketon-peroxide. Suitable metal accelerators include organic salts of Co(II), Mn(II), Cu(I), Cu(II) or Fe(II), such as the metal salts of ethylhexanoate or naphthenate.

When curing is conducted at a temperature of above 45 °C and 120 °C, it may be referred to as "thermal curing". Thermal curing can be conducted with one or more thermal initiator agents as curing agents. Suitable thermal initiator agents include peroxides, azo-compounds and C-C labile compounds.

Suitable peroxides include methyl ethyl ketone peroxide, 2,4-pentanedione peroxide, methyl isobutyl ketone peroxide, cyclohexanone peroxide, dibenzoyl peroxide, tert-butyl peroxyneodecanoate, 2,5-dimethyl-2,5-di-(2-ethyl-hexanoylperoxy)hexane, tert-amyl peroxy-2-ethylhexanoate, tert-butyl peroxy-2-ethylhexanoate, tert-butyl peroxy-3,5,5-trimethylhexanoate, tert-butyl peroxy-2-methylbenzoate, tert-butylperoxy 2-ethylhexyl carbonate, tert-butylperoxy isopropyl carbonate, tert-amyl peroxybenzoate, tert-butyl peroxybenzoate, 1,1-di-(tert-amylperoxy) cyclohexane, 1,1-di-(tert-butylperoxy)-3,3,5-trimethylcyclohexane, 1,1-di-(tert-butylperoxy)-cyclohexane, 2,2-di-(tert-amylperoxy)butane, n-butyl 4,4-di-(tert-butylperoxy)valerate, dilauroyl peroxide, di-(2-tert-butylperoxyisopropyl)benzene, dicumyl peroxide, 2,5-dimethyl-2,5-di-(tert-butylperoxy)hexane, di-tert-butyl peroxide, di-tert-amyl peroxide, dicumyl peroxide, di(tert-butylperoxyisopropyl)benzene, 2,5-dimethyl-2,5-di(tert-amyl-peroxy)hexane, tert-butyl cumyl peroxide, 2,5-dimethyl-2,5-di(tert-butylperoxy)hexyne-3, 3,6,9-triethyl-3,6,9-trimethyl-1,4,7-triperoxocyclononane, di-(4-tert-butylcyclohexyl) peroxydicarbonate, di-(2-ethylhexyl) peroxydicarbonate, tert-butyl hydroperoxide, cumyl hydroperoxide, isopropylcumyl hydroperoxide, and 1,1,3,3-tetramethylbutyl hydroperoxide.

Suitable azo-compounds include 2,2'-azobis(2-isobutyronitrile), 2,2'-azobis(2-methylbutyronitrile), and 1,1'-azobis(hexahydrobenzo-nitrile).

Suitable C-C labile compounds include 2,3-dimethyl-2,3-diphenylbutane and 3,4-dimethyl-3,4-diphenylhexane.

Further suitable curing agents include compounds which generate radicals when irradiated with UV-A light, i.e., light of a wavelength of 315 to 380 nm. Such curing agents may be referred to as photoinitiators. Suitable photoinitiators include derivatives of benzoin, benzil, α-hydroxyketones, α-amino ketones, acylphosphine oxides, bisacylphosphine oxides, or combinations thereof. Preferred photoinitiators include Irgacure^{®} 369, Irgacure^{®} 651, Irgacure^{®} 184, Irgacure^{®} 819, Irgacure^{®} 907 and Lucirin^{®} TPO.

In one embodiment, the curable resin composition does not comprise a curing agent.

The composite glass fiber material may be obtained from the curable resin composition by curing. In a preferred embodiment, curing is performed by radical polymerization via a curing agent. Suitable curing agents are described above. Alternatively, curing can be performed in the absence of a curing agent.

The curing may be carried out by means of high-energy radiation. Examples for high-energy radiation suitable for curing are electron radiation, or α-, β-, or γ-radiation, preferably γ-radiation.

The curing of the unsaturated ethylenically unsaturated polyester resin composition is preferably performed at an elevated temperature, preferably in the range of 120 to 250 °C. The temperature may be raised stepwise during the curing process.

In a preferred embodiment, the curing of the unsaturated polyester resin composition is conducted at a temperature in the range of 15 to 50 °C for 2 to 200 hours and afterwards at 80 to 120 °C for 2 to 24 hours.

In one embodiment, the cured unsaturated polyester resin composition is further subjected to a post-curing process. The duration of the post-curing is preferably 1 to 12 hours. Post-curing is preferably carried out at a temperature of 80 to 200 °C, in particular at 80 to 150 °C.

The composite glass fiber material according to the invention may be used used for the production of tanks, polymer concrete, engineered stone, apparatus construction, medical equipment, railroad equipment, oil and gas field equipment, automotive body parts, truck body parts, head lamp reflectors, gelcoats, topcoats, protective layers and other coating applications such as spray coating, inmold coating and painting, putties, cast products, buttons, porous materials (e.g. foams, membranes etc.), production of fibers, production of tools, electronic devices, flame retardant thermosets, profiles, containers, moldings, polymer parts, long field lamp carrier, oil sinks, sheets/plates, railway interior parts, bondings and pipes.

The invention moreover provides a method for producing a composite glass fiber material, comprising contacting glass fibers with a curable resin composition comprising
(i) an ethylenically unsaturated resin; and
(ii) a reactive diluent, which is an N-vinyloxazolidinone of formula (I) 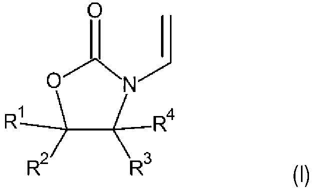
in which R¹, R², R³ and R⁴ are independently from one another selected from a hydrogen atom and an organic moiety comprising 1 to 10 carbon atoms;
wherein the reactive diluent (ii) is present in an amount of at least 0.5 wt-% relative to the total amount of reactive diluent (ii) and further reactive diluents;
and curing the curable resin composition to form a thermosetting polymer, thereby obtaining the composite glass fiber material.

The above discussion and embodiments regarding the inventive composite glass fiber material are understood to likewise apply to the inventive method.

The term "contacting" as used herein is to be understood broadly and includes all measures leading to a material in which the glass fibers are present in a matrix of the cured resin composition. This includes mixing the glass fibers with the curable resin composition, impregnating knitted or woven fabrics of the glass fiber with the curable resin composition, impregnating glass fiber rovings with the curable resin composition and the like.

The invention moreover provides a use of an N-vinyloxazolidinone of formula (I) 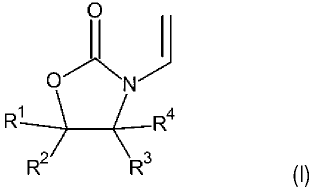
in which R¹, R², R³ and R⁴ are independently from one another selected from a hydrogen atom and an organic moiety comprising 1 to 10 carbon atoms;
in a process of obtaining a composite glass fiber material.

In one embodiment, a curable resin composition comprising
(i) an ethylenically unsaturated resin as defined above; and
(ii) a reactive diluent, which is an N-vinyloxazolidinone of formula (I) as defined above;
wherein the reactive diluent (ii) is present in an amount of at least 0.5 wt-% relative to the total amount of reactive diluent (ii) and further reactive diluents; is used for producing a composite glass fiber material.

The above discussion and embodiments regarding the inventive composite glass fiber material are understood to likewise apply to the inventive use.

The invention moreover provides a curable resin composition comprising
(i) an ethylenically unsaturated resin; and
(ii) a reactive diluent, which is an N-vinyloxazolidinone of formula (I) 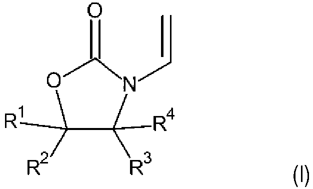
   in which R¹, R², R³ and R⁴ are independently from one another selected from a hydrogen atom and an organic moiety comprising 1 to 10 carbon atoms;
   wherein the reactive diluent (ii) is present in an amount of at least 0.5 wt-% relative to the total amount of reactive diluent (ii) and further reactive diluents;
   and wherein the ethylenically unsaturated resin (i) is selected from an ethylenically unsaturated polyester resin, a vinyl ester resin, and combinations thereof.

The above discussion and embodiments regarding the inventive composite glass fiber material are understood to likewise apply to the inventive curable resin composition.

The curable resin composition as described above may be used as a matrix polymer for reinforced and non-reinforced thermosets in SMC-technology (sheet molding composite technology), BMC-technology (bulk molding technology), resin transfer molding (RTM), compression molding, hot molding, FCS-technology (fiber composite spraying technology), injection molding, vacuum assisted resin infusion, continuous sheet production, filament winding, rotation molding, lamination, vacuum-pressure-impregnation (VPI-process), pultrusion, casting, bundling, bonding, coating such as gel coating, top coating, spray coating, filling, inmold coating, knife-coating, dipping, dropping, painting, wire painting (enamel coating), fiber spinning and foaming.

The present invention relates in particular to the following embodiments.
1. A composite glass fiber material comprising a thermosetting polymer, wherein the thermosetting polymer is obtained from a curable resin composition comprising
   (i) an ethylenically unsaturated resin; and
   (ii) a reactive diluent, which is an N-vinyloxazolidinone of formula (I) 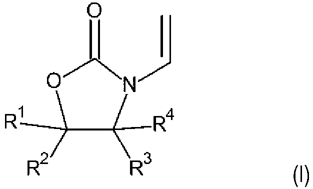 in which R¹, R², R³ and R⁴ are independently from one another selected from a hydrogen atom and an organic moiety comprising 1 to 10 carbon atoms;
      wherein the reactive diluent (ii) is present in an amount of at least 0.5 wt-% relative to the total amount of reactive diluent (ii) and further reactive diluents.
2. The material according to embodiment 1, wherein
   - at least two of R¹, R², R³ and R⁴, for example each of R¹, R², R³ and R⁴, are a hydrogen atom; or
   - R¹ is a C₁-C₄ alkyl group and R², R³ and R⁴ are a hydrogen atom; or
   - R⁴ is a C₁-C₄ alkyl group and R¹, R² and R³ are a hydrogen atom; or
   - R¹ and R² are a hydrogen atom and R³ and R⁴ are a C₁-C₄ alkyl group.
3. The material according to any one of the preceding embodiments, wherein the N-vinyloxazolidinone of formula (I) is 3-vinyloxazolidin-2-one, 4-methyl-3-vinyl-oxazolidin-2-one or 5-methyl-3-vinyl-oxazolidin-2-one, in particular 5-methyl-3-vinyl-oxazolidin-2-one.
4. The material according to any one of the preceding embodiments, wherein the ethylenically unsaturated resin (i) is selected from an ethylenically unsaturated polyester resin, a vinyl ester resin and a urethane (meth)acrylate resin.
5. The material according to any one of the preceding embodiments, wherein the weight ratio of the ethylenically unsaturated resin (i) to the total amount of reactive diluents in the curable resin composition is in the range of 15 : 85 to 85 : 15, more preferably in the range of 25 : 75 to 75 : 25, in particular 30 : 70 to 70 : 30 or 30 : 70 to 60 : 40.
6. The material according to any one of the preceding embodiments, wherein the ethylenically unsaturated resin (i) has at least one of the following features:
   - a number average molecular weight, as determined by gel permeation chromatography, in the range of 500 to 10,000 g/mol;
   - an acid value in the range of 5 to 80 mg KOH/g, as determined via titration according to DIN EN ISO 2114; and
   - a hydroxyl value in the range of 5 to 80 mg KOH/g, as determined via titration according to DIN EN ISO 4692-2.
7. The material according to any one of the preceding embodiments, wherein the ethylenically unsaturated resin (i) has an ethylene group density in the range of 0.5 to 10 mol/kg, in particular in the range of
   - 2.0 to 9.0 mol/kg, when the ethylenically unsaturated resin (i) is an ethylenically unsaturated polyester resin;
   - 1.0 to 4.5 mol/kg, when the ethylenically unsaturated resin (i) is a vinyl ester resin;
   - 1.0 to 5.0 mol/kg, when the ethylenically unsaturated resin (i) is a urethane (meth)acrylate resin; wherein the ethylene group density signifies the molar proportion of ethylene groups per kg of resin, as determined via nuclear magnetic resonance spectroscopy.
8. The material according to any one of the preceding embodiments, wherein the curable resin composition preferably comprises the ethylenically unsaturated resin (i) in an amount of 15 to 85 wt.-% based on the total weight of the curable resin composition, more preferably 15 to 75 wt.-%, most preferably 20 to 60 wt.-%.
9. The material according to any one of the preceding embodiments, wherein the curable resin composition comprises one or more further reactive diluents selected from styrene and styrene derivatives, epoxides, vinyl ethers, acrylates and methacrylates.
10. The material according to any one of the preceding embodiments, comprising glass fibers having a length-to-diameter ratio in the range of 20 to 100000, preferably 50 to 100000.
11. The material according any one of the preceding embodiments, comprising the thermosetting polymer in an amount in the range of 10 to 90 wt.-%, based on the total weight of the material.
12. A method for producing a composite glass fiber material, comprising contacting glass fibers with a curable resin composition comprising
   (i) an ethylenically unsaturated resin; and
   (ii) a reactive diluent, which is an N-vinyloxazolidinone of formula (I) 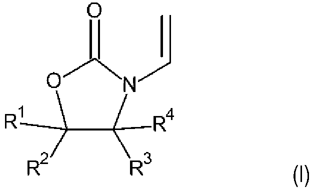 in which R¹, R², R³ and R⁴ are independently from one another selected from a hydrogen atom and an organic moiety comprising 1 to 10 carbon atoms;
      wherein the reactive diluent (ii) is present in an amount of at least 0.5 wt-% relative to the total amount of reactive diluent (ii) and further reactive diluents;
      and curing the curable resin composition to form a thermosetting polymer, thereby obtaining the composite glass fiber material.
13. Use of an N-vinyloxazolidinone of formula (I) 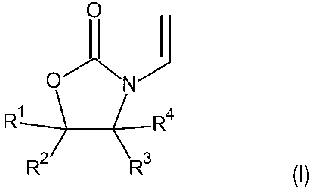
   in which R¹, R², R³ and R⁴ are independently from one another selected from a hydrogen atom and an organic moiety comprising 1 to 10 carbon atoms;
   in a process of obtaining a composite glass fiber material.
14. The use according to embodiment 13, wherein a curable resin composition comprising
   (i) an ethylenically unsaturated resin; and
   (ii) a reactive diluent, which is an N-vinyloxazolidinone of formula (I);
      wherein the reactive diluent (ii) is present in an amount of at least 0.5 wt-% relative to the total amount of reactive diluent (ii) and further reactive diluents;
      is used for producing a composite glass fiber material.
15. A curable resin composition comprising
   (i) an ethylenically unsaturated resin; and
   (ii) a reactive diluent, which is an N-vinyloxazolidinone of formula (I) 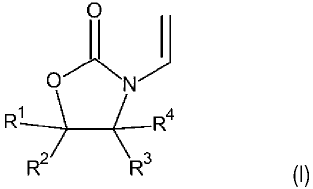 in which R¹, R², R³ and R⁴ are independently from one another selected from a hydrogen atom and an organic moiety comprising 1 to 10 carbon atoms;
      wherein the reactive diluent (ii) is present in an amount of at least 0.5 wt-% relative to the total amount of reactive diluent (ii) and further reactive diluents;
      and wherein the ethylenically unsaturated resin (i) is selected from an ethylenically unsaturated polyester resin, a vinyl ester resin, and combinations thereof.
16. The curable resin composition of embodiment 15, wherein the curable resin composition comprises the ethylenically unsaturated resin (i) in an amount of 15 to 85 wt.-% based on the total weight of the curable resin composition, more preferably 15 to 75 wt.-%, most preferably 20 to 60 wt.-%.

The invention is described in further detail by the subsequent examples.

### Examples

Ethylenically unsaturated resins were obtained as described below.

The following table provides an overview of the reactants, stabilizers and initiators used in the working examples.

| Material | Manufacturer |
|---|---|
| maleic anhydride | Möller Chemie GmbH & Co. KG |
| fumaric acid | ESIM Chemicals |
| phthalic anhydride | Thermo Scientific Acros |
| tetrahydrophthalic anhydride | Merck KGaA |
| propylene glycol (99.0%) | chemiekontor.de GmbH |
| dipropylene glycol | ACROS Organics^{™} Thermo Scientific Acros |
| diethylene glycol | Möller Chemie GmbH & Co. KG |
| neopentyl glycol | BASF |
| 2-methyl-2-propylpropane-1,3-diol | TCI Deutschland GmbH |
| hydroquinone (99.5%) | ACROS Organics |
| butylstannoic acid (95.0%, Fascat^{®} 4100) | Thermo Fisher (Kandel) GmbH |
| 3,5-di-tert-butyl-4-hydroxytoluene | Sigma-Aldrich Chemie GmbH |
| 4-methoxyphenol | Alfa Aesar |
| dibutyltin dilaurate | Sigma-Aldrich Chemie GmbH |
| triphenylphosphine | Merck Schuchardt OHG |
| benzyldimethylamine | Alfa Aesar |
| Lupranat MI^{®} | BASF SE |
| bisphenol-A-diglycidylether | Sigma-Aldrich Chemie GmbH |
| methacrylic acid | ACROS Organics |
| t-butyl acrylate | Thermo Fisher (Kandel) GmbH |
| 1,4-butanediol acrylate | BASF |
| 1,4-butanediol dimethacrylate (1,4-BDDMA) | Evonik Performance Materials GmbH |
| triethylene glycol dimethacrylate | Evonik Performance Materials GmbH |
| 2-hydroxypropyl methacrylate | Evonik Performance Materials GmbH |
| cyclohexyl vinyl ether | BASF |
| 4-methylstyrene | Sigma-Aldrich Chemie GmbH |
| 4-tert-butylstyrene | Thermo Fisher (Kandel) GmbH |
| divinylbenzene | Merck KGaA |
| aceto acetoxy ethyl methacrylate (AAEMA) | Merck KGaA |
| dimethyl itaconate (DMI) | ACROS Organics |
| 5-methyl-3-vinyl-oxazolidin-2-one (> 94.0%, VMOX^{®}, comprising about 4% of 4-methyl-3-vinyl-oxazolidin-2-one) | BASF |
| Tinuvin^{®} 765 (mixture of bis(1,2,2,6,6-pentamethyl-4-piperidyl)sebacate and methyl 1,2,2,6,6-pentamethyl-4-piperidyl sebacate) | BASF |
| Irganox^{®} 819 (bis(2,4,6-trimethylbenzoyl) phenylphosphine oxide) | BASF |
| tert-Butyl peroxybenzoate (TBPB) (98.0 %) | ACROS Organics^{™} Thermo Scientific Acros |
| methyl ethyl ketone peroxide (MEKP) | United Initiators GmbH |
| BÜFA^{®}-Accelerator Co 1 | Büfa Chemicals GmbH & Co. KG |
| Trigonox^{®} 21 (tert-butyl peroxy-2-ethylhexanoate) | Nouryon Chemicals Holding B.V. |

### A-1. Production of Ethylenically Unsaturated Polyester Resins

Ethylenically unsaturated polyester resins were obtained by reacting the compounds specified in the table below in the indicated molar ratios. The ethylenically unsaturated polyester resins were prepared by melt polycondensation.

A four-neck flask (2L) was provided. In the middle neck, a stirrer with a single blade was mounted. The bearing casing of the stirrer was constantly cooled with water. On the three other necks, a thermocouple, an insulated packed column and a plug were provided. A distillation bridge with a ground-joint thermometer was mounted on the column so as to monitor the head temperature of the system during polycondensation. A graduated cylinder (250 mL) was attached to the distillation bridge to collect and measure the amount of condensed water. The thermocouple was connected to a Julabo laboratory controller (PID) and controlled the reactor temperature via a computer program (JULABO EasyTemp Professional). A heating mantle, which was also controlled by the Julabo laboratory controller, served as the heating source.

At the beginning of the reaction 500 ppmw of hydroquinone, relative to the total reaction mixture, were added as a free radical scavenger. As esterification catalyst, 400 ppmw of Fascat 4100 (butyltinic acid), relative to the total reaction mixture, were added the beginning of the reaction. The reaction was carried out under nitrogen atmosphere (99.999% nitrogen) in a four-neck flask (2 L) with a stirrer and a thermometer as described above.

Heating from room temperature to 80 °C was carried out via program control, as fast as possible while avoiding overheating. At 80 °C, the ring opening of the maleic anhydride takes place and an exothermic reaction takes place. The heating was switched off in order not to overheat the melt. After completion of the exothermic reaction, the temperature was further increased up to 110 °C. Subsequently, the reaction temperature was increased by 10 °C per hour up to 190°C. At 135 to 145°C, the first formation of water was observed. Once the melt of the unsaturated polyester reached 190°C, the reaction was stopped. The polymer was cooled and left in its solid form overnight.

Subsequently, the polymer was melted again by heating to 190 °C. The reaction was carried out until the required acid value was obtained. For the polyesters with phthalic anhydride, the melt was cooled down to 155 °C and stirred for one hour. Subsequently, the unsaturated polyester was poured into a shallow rectangular mold, where it cooled and solidified.

The acid value (neutralization number) is the mass of potassium hydroxide (KOH) in milligrams required to neutralize one gram of the ethylenically unsaturated resin. The acid value indicates the number of carboxylic acid groups per gram of compound and was determined via titration according to DIN EN ISO 2114.

The hydroxyl value is the amount of potassium hydroxide (KOH) in milligrams required to neutralize the acetic acid taken up on acetylation of one gram of a chemical substance containing free hydroxyl groups. The hydroxyl value indicates the number of free hydroxyl group per gram of compound and was determined via titration according to DIN EN ISO 4692-2.

The ethylene group density signifies the molar proportion of ethylene groups per kg of resin. The ethylene group density was determined via nuclear magnetic resonance (NMR) spectroscopy.

The glass-transition temperature T_{g} of ethylenically unsaturated polyester resins was determined via Differential Scanning Calorimetry (DSC). The DSC measurements were carried out using a DSC device Sirius 3500 from Netzsch. Hermetically sealable Tzero aluminium pans were used. For the DSC measurement, about 15 mg of unsaturated polyester resin were added to a Tzero pan. The Tzero lid was then placed on the pan and sealed with the help of a press, the pan was inserted into the DSC and the measurement was started.

In a first heating cycle, the pans were first cooled to 0 °C and then heated up to 100 °C at 10 K/min. In a second heating cycle, the pans were cooled to -80 °C and then heated up to 100 °C at 10 K/min. The T_{g} was determined from the second heating cycle.

The mass-average molecular weight M_{w} and the number-average molecular weight Mₙ were determined by gel permeation chromatography, in particular using styrene-divinylbenzene copolymer as a stationary phase and tetrahydrofuran (THF) as an eluent, and calibration using polystyrene of defined molecular weight. Gel permeation chromatography can be carried out using a SECcurity GPC Systems apparatus from PSS Polymer Standard Solution. The polydispersity index Q was calculated as M_{w}/ Mₙ.

In particular, an analytical column from PSS Polymer Standard Solution was used as the separation column. The stationary phase consisted of styrene-divinylbenzene copolymer (SDV) with a particle size of 3 µm and a nominal pore size of 100 Å. The eluent was tetrahydrofuran (THF). The separation column was tempered to 35 °C in the column oven. The injected sample volume was 50 µL at a sample concentration of 4.94 g/L, which in sample preparation corresponds to 50 mg sample to 9 g eluent. The flow rate of the eluent was 0.5 mL/min. The samples were detected with a refractive index detector and a UV-VIS detector, with the measurement signal being registered every second. Two GPC measurement series were carried out for each polyester. The chromatograms were evaluated using PSS WinGPC UniChrom software. Calibration was carried out with a suitable standard kit of styrene oligomers and polymers.

The melt viscosity was determined according to the table below at 100 °C or 150 °C via an ICI - Cone-Plate viscosimeter from Epprecht Control & Instrument (FIC). A standard cone C (Ø = 19.5 mm, cone angle 0.5°) was used for the measurements. Approximately 0.5 g of the solid unsaturated polyester resins were used for the measurements.

The following table shows the composition and properties of the unsaturated resins.

| # | Ethylenically Unsaturated Resin (molar ratio of reactants) | AV ¹ [mg (KOH)] | EGD ² [g/mol] | T_{G} [°C] | Mₙ [g/mol] | M_{W} [g/mol] | Q ³ | T_{V}⁴ [°C] | shear rate [s^{.1}] | η⁵ [mPa·s] |
|---|---|---|---|---|---|---|---|---|---|---|
| 1-1 | maleic anhydride - phthalic anhydride - propylene glycol (1.0 : 2.0 : 3.3) | 45 | 591.30 | 9.5 | 570 | 1500 | 2.6 | 150 | 2500 | 2640 |
| 1-2 | maleic anhydride - phthalic anhydride - propylene glycol (1.0 : 0.5 : 1.65) | 35 | 270.63 | 11.1 | 950 | 2600 | 2.7 | 150 | 2500 | 2600 |
| 1-3 | maleic anhydride - propylene glycol - neopentyl glycol (1.0 : 0.93 : 0.20) | 25 | 171.63 | 1.2 | 2200 | 5650 | 2.6 | 150 | 2500 | 2560 |
| 1-4 | maleic anhydride - tetrahydrophthalic anhydride - diethylene glycol (1.0 : 0.5 :1.59) | 46 | 315.83 | -25.7 | 800 | 2100 | 2.6 | 100 | 10000 | 220 |
| 1-5 | maleic anhydride - phthalic anhydride - propylene glycol - dipropylene glycol (1.0 : 0.2 : 1.0 : 0.3) | 25 | 225.67 | 0.0 | 1721 | 4932 | 2.9 | 100 | 2500 | 2053 |

| | | | | | | | | | | |
|---|---|---|---|---|---|---|---|---|---|---|
| ¹ AV = acid value ² EGD = ethylene group density ³ Q = polydispersity index ⁴ T_{V} = temperature at which the viscosity measurement was conducted ⁵ η = viscosity B. Prediction of the Hansen Solubility Parameters of the Unsaturated Resins | | | | | | | | | | |

The Hansen Parameters of the unsaturated resins were predicted on the basis of the corresponding oligomers using the software COSMOquick 2021. First, the molecules were drawn as 12-mer oligomers in the included JChemPaint module. Then, the corresponding SMILES strings were generated. Finally, quantitative structure-activity relationship (QSPR) models were used to obtain the Hansen Solubility

Parameters. The QSPR results were fitted to empirical published Hansen values ("Hansen Solubility Parameters: A User's Handbook", C. M. Hansen, 2007, 2nd Edition, CRC). The results are shown in the table below.

| # | Unsaturated Resin | Hansen Solubility Parameter [MPa^{1/2}] | | |
|---|---|---|---|---|
| | | δₚ | δ_{d} | δₕ |
| 1-1 | maleic anhydride - phthalic anhydride - propylene glycol (1.0 : 2.0 : 3.3) | 5.019 | 17.527 | 14.101 |
| 1-2 | maleic anhydride - phthalic anhydride - propylene glycol (1.0 : 0.5 : 1.65) | 4.735 | 17.381 | 14.263 |
| 1-3 | maleic anhydride - propylene glycol - neopentyl glycol (1.0 : 0.93 : 0.20) | 4.162 | 16.345 | 9.130 |
| 1-4 | maleic anhydride - tetrahydrophthalic anhydride - diethylene glycol (1.0 : 0.5 :1.59) | 6.006 | 17.908 | 15.614 |

### C. Curable Resin Compositions

### C-1. Production of Curable Resin Compositions

The solidified ethylenically unsaturated resins obtained according to item A-1 were crushed using a hammer. If the unsaturated resins did not solidify at room temperature, they were cooled with liquid nitrogen and then crushed in cold state. The crushed resins were used to produce the curable resin composition according to the tables below. First, the unsaturated resin particles were weighed into glass bottles. Subsequently, the reactive diluent or reactive diluent mixtures according to the table below were added. Tinuvin^{®} 765 (1,000 ppmw) was added to the resins with VMOX^{®} as reactive diluent so as to suppress gelation. The bottles were placed on a roller mixer and mixed for several days. The curable resin compositions were considered ready for use when the unsaturated resin particles were completely dissolved in the reactive diluent or reactive diluent mixtures.

### C-2. Solubility

The bottles obtained according to item C-1 were placed on a roller mixer and mixed for several days. The bottles obtained according to item C-1 wherein the curable resin compositions comprised cyclohexyl vinyl ether were subsequently placed in an oven at 60 °C for 3 h. The solubility of the ethylenically unsaturated resin particles in the reactive diluent was visually checked at regular intervals.

The results of the solubility tests are shown in the table below.

| Unsaturated Resin | Reactive Diluent | Observations on Solubility |
|---|---|---|
| 1-1 | VMOX^{®} (50 wt.-%) | clear solution |
| | VMOX^{®} (60 wt.-%) | clear solution |
| | VMOX^{®} (70 wt.-%) | clear solution |
| | tert-butyl acrylate (60 wt.-%) | turbid solution |
| | 1,4-butanediol diacrylate (60 wt.-%) | clear solution |
| | cyclohexyl vinyl ether (70 wt.-%) | clear solution |
| | 4-methylstyrene (50 wt.-%) | clear solution |
| | 4-methylstyrene (70 wt.-%) | turbid solution |
| | 4-tert-butylstyrene (50 wt.-%) | insoluble |
| | 4-tert-butylstyrene (70 wt.-%) | insoluble |
| | divinylbenzene (50 wt.-%) | clear solution |
| | divinylbenzene (70 wt.-%) | turbid solution |
| 1-2 | VMOX^{®} (50 wt.-%) | clear solution |
| | VMOX^{®} (60 wt.-%) | clear solution |
| | VMOX^{®} (70 wt.-%) | clear solution |
| | tert-butyl acrylate (60 wt.-%) | clear solution |
| | 1,4-butanediol diacrylate (60 wt.-%) | clear solution |
| | cyclohexyl vinyl ether (70 wt.-%) | initially turbid solution, almost clear at 60 °C |
| | 4-methylstyrene (50 wt.-%) | turbid solution |
| | 4-methylstyrene (70 wt.-%) | turbid solution |
| | 4-tert-butylstyrene (50 wt.-%) | insoluble |
| | 4-tert-butylstyrene (70 wt.-%) | insoluble |
| | divinylbenzene (50 wt.-%) | turbid solution |
| | divinylbenzene (70 wt.-%) | turbid solution, two phases |
| 1-3 | VMOX^{®} (50 wt.-%) | clear solution |
| | VMOX^{®} (60 wt.-%) | clear solution |
| | VMOX^{®} (70 wt.-%) | clear solution |
| | tert-butyl acrylate (60 wt.-%) | initially clear solution, turbid after two weeks |
| | 1,4-butanediol diacrylate (60 wt.-%) | clear solution |
| | cyclohexyl vinyl ether (70 wt.-%) | initially turbid solution, two phases at 60 °C |
| | 4-methylstyrene (50 wt.-%) | turbid solution |
| | 4-methylstyrene (70 wt.-%) | turbid solution |
| | 4-tert-butylstyrene (50 wt.-%) | insoluble |
| | 4-tert-butylstyrene (70 wt.-%) | insoluble |
| | divinylbenzene (50 wt.-%) | turbid solution |
| | divinylbenzene (70 wt.-%) | turbid solution, two phases |
| 1-4 | VMOX^{®} (50 wt.-%) | clear solution |
| | VMOX^{®} (60 wt.-%) | clear solution |
| | VMOX^{®} (70 wt.-%) | clear solution |
| | tert-butyl acrylate (60 wt.-%) | clear solution |
| | cyclohexyl vinyl ether (70 wt.-%) | initially turbid solution, two phases at 60 °C |
| | 4-methylstyrene (50 wt.-%) | turbid solution |
| | 4-methylstyrene (70 wt.-%) | turbid solution, two phases |
| | 4-tert-butylstyrene (50 wt.-%) | insoluble |
| | 4-tert-butylstyrene (70 wt.-%) | insoluble |
| | divinylbenzene (50 wt.-%) | turbid solution |
| | divinylbenzene (70 wt.-%) | turbid solution, two phases |

Turbid solutions indicate that dissolution is not fully achieved. It is evident that VMOX^{®} allows for full solubility of the examined unsaturated resins.

### C-3. Surface Tackiness and Curing Properties

The surface of unsaturated polyester thermosets made from resins with acrylates as reactive diluents may be tacky after curing under air. The tackiness of the thermoset surface is induced by oxygen inhibition during the radical curing process. The tackiness of thermosetting polymers obtained from curable resin compositions comprising tert-butyl acrylate or VMOX^{®}, respectively, was compared.

Unsaturated polyester resin 1-2 was dissolved in 60 wt.-% of tert-butyl acrylate or VMOX^{®}, as indicated in the table below, to obtain curable resin compositions. 1 wt.-% of Trigonox 21 was added to each of the curable resin compositions. The curable resin compositions were cured using the following curing profile: 2 h at 60 °C, then 2 h at 80 °C, then 2 h at 100 °C. The results are shown in the table below.

| Unsaturated Resin | Reactive Diluent (60 wt.-%) | | Observations |
|---|---|---|---|
| 1-2 | tert-butyl acrylate | - | slightly tacky surface after curing |
| 1-2 | - | VMOX^{®}* | no tackiness of surface after curing |

| | | | |
|---|---|---|---|
| * 1000 ppmw of Tinuvin^{®} 765 (relative to the total amount of the curable resin composition) were added with VMOX^{®} to improve storage stability. | | | |

Both curable resin compositions can be cured to yield thermosetting polymers having smooth surfaces, wherein the thermosetting polymer obtained from the curable resin composition comprising VMOX^{®} displays no surface tackiness. It is noted that this effect is achieved in the resin composition comprising VMOX^{®} despite the presence of Tinuvin^{®} 765, which may act as an inhibitor in the curing process.

Further, the curing properties of unsaturated resins 1-1 to 1-4 in 1,4-butanediol diacrylate were examined. The respective unsaturated resin was dissolved in 60 wt.-% of 1,4-butanediol diacrylate to obtain curable resin compositions. 1 wt.-% of Trigonox 21 was added to each of the curable resin compositions. The curable resin compositions were cured using the following curing profile: 2 h at 60 °C, then 2 h at 80 °C, then 2 h at 100 °C to obtain thermosetting polymers.

It was found that each of the resins with 1,4-butanediol diacrylate as reactive diluent foamed during thermal curing under air. The surface of the obtained thermosetting polymers was uneven and rough, and its quality was not sufficient for further investigations.

### C-4. Glass-Transition Temperature T_{g}

The glass-transition temperatures of thermosetting polymers obtained from curable resin compositions comprising different reactive diluents according to the table below was compared. The curable resin compositions each comprised 1 wt.-% of tert-butyl peroxybenzoate. The curable resin compositions were cured using the following curing profiles to obtain thermosetting polymers: A) 2 h at 60 °C, then 2 h at 80 °C, then 2 h at 100 °C; or B) 1 h at 80 °C, then 1 h at 160 °C. The results are shown in the table below.

| Curable Resin Composition | T_{g} of Thermosetting Polymer |
|---|---|
| Resin 1-3 in 50 wt.-% of VMOX^{®} (Curing Profile A) | 209 °C |
| Resin 1-3 in 50 wt.-% of 1,4-butanediol dimethaycrylate (Curing Profile A) | 166 °C |
| Resin 1-3 in 50 wt.-% of triethylene glycol dimethacrylate (Curing Profile A) | 165 °C |
| Resin 1-1 in 50 wt.-% of VMOX^{®} (Curing Profile B) | 106 °C |
| Resin 1-1 in 70 wt.-% of VMOX^{®} (Curing Profile B) | 144 °C |
| Resin 1-1 in 50 wt.-% of 4-methylstyrene (Curing Profile B) | 113 °C |
| Resin 1-1 in 50 wt.-% of divinylbenzene (Curing Profile B) | 94 °C |

It is evident that VMOX^{®} as reactive diluent induces at least 40 °C higher glass transition temperatures of the thermosetting polymer obtained with resin 1-3 than the use of 1,4-butanediol dimethacrylate or triethylene glycol dimethacrylate as reactive diluent. It is moreover evident that VMOX^{®} as reactive diluent at high concentrations induces high glass transition temperatures, which are not obtainable with 4-methylstyrene or divinylbenzene due to solubility issues at comparably high concentrations of these reactive diluents.

### C-5. Cold Curing

The properties of thermosetting polymers obtained by cold curing of curable resin compositions according to the table below with VMOX^{®} or 1,4-butanediol dimethacrylate (1,4-BDDMA) as reactive diluent were compared. Aceto acetoxy ethyl methacrylate (AAEMA) and dimethyl itaconate (DMI) were used as further reactive diluents. Before curing, 1.5 wt.-% of cobalt accelerator (BÜFA@-Accelerator Co 1) was added to the curable resin composition and the composition was homogenized in a roller mixer for 1 h. Subsequently, 1.5 wt.-% of methyl ethyl ketone peroxide (MEKP) was added and mixed with the curable resin composition using a wooden spatula. The curable resin composition processed immediately after addition of MEKP.

Approximately 10 g of the resin were placed on a metal mold (dimensions: 10 cm x 10 cm). The resin was evenly distributed, and a layer of biaxial fiberglass fabric (831 g/m², 0°/90°, item number S14EB490-00831-01300-474000 from Saertex, dimensions: 10 cm x 10 cm) was placed in the resin. Once all air bubbles had been removed using a wooden spatula, the second layer of resin was added. A second fiberglass fabric layer was placed at an angle of 90° to the first layer and also wetted with resin. This process was repeated once again so that the metal dish contained three layers of glass fiber at 90° to each other and about 30 g of resin composition.

Cold curing was performed at a temperature of approximately 25 °C. The tackiness of the obtained samples was haptically controlled in regular intervals of about 6 h during the daytime. The results are shown in the table below.

| Unsaturated Resin [40 wt.-%] | VMOX^{®} [wt.-%] | 1,4-BDDMA [wt.-%] | AAEMA [wt.-%] | DMI [wt.-%] | Time until Surface of Samples was Non-Tacky |
|---|---|---|---|---|---|
| 1-1 | 60 | - | - | - | 5 days |
| | 58 | - | 2 | - | 4 days |
| | - | 56 | 4 | - | 7 days |
| | 53 * | - | 2 | - | 4 days |
| | 43 * | - | 2 | 10 | 2 days |
| 1-2 | 60 | - | - | - | 4 days |
| | 58 | - | 2 | - | 3 days |
| | 56 | - | 4 | - | 1 day |
| | - | 56 | 4 | - | 7 days |
| 1-3 | 60 | - | - | - | 2 days |
| | 58 | - | 2 | - | 1 day |
| | - | 56 | 4 | - | 7 days |

| | | | | | |
|---|---|---|---|---|---|
| * carried out with 45 wt.-% of unsaturated resin | | | | | |

It is evident that cold curing of resins containing VMOX^{®} as reactive diluent proceeds faster than that of resins containing 1,4-BDDMA as reactive diluent.

### C-6. Curable Resin Compositions with Further Reactive Diluents

An ethylenically unsaturated polyester resin obtained from fumaric acid and 2-methyl-2-propylpropane-1,3-diol (molar ratio 1.0 : 1.02, δₚ = 5.702 MPa^{1/2}) was provided in accordance with item A-1. The unsaturated resin was cooled with liquid nitrogen and then crushed in cold state. The crushed unsaturated resin was used to produce a curable resin composition. First, the unsaturated resin particles were weighed into glass bottles. Subsequently, a mixture of styrene and VMOX^{®} as well as stabilizer were added according to the tables below.

The bottles were placed on a roller mixer. The solubility or the progress of the dissolution process of the unsaturated polyester particles in the reactive diluent was visually checked at regular intervals. The resin compositions were considered ready for use as soon as everything was dissolved.

The results of the solubility tests are shown in the tables below. In order to determine the Hansen solubility parameters of the mixture of styrene and VMOX^{®} the mass fractions were converted into volume fractions by using the following formula: ${φ}_{1} = \frac{\left(\frac{{ω}_{1}}{{ρ}_{1}}\right)}{\left(\frac{{ω}_{1}}{{ρ}_{1}}\right) + \left(\frac{{ω}_{2}}{{ρ}_{2}}\right)}$ wherein φ₁ is the volume fraction of component 1, ω₁ is the mass fraction of component 1, ω₂ is the mass fraction of component 2, ρ₁ is the density of component 1 and ρ₂ is the density of component 2. The density of styrene is 0.909 kg/m³. The density of VMOX^{®} is 1.098 kg/m³.

The Hansen solubility parameters of the mixture of styrene and VMOX^{®} in comparison to the Hansen solubility parameters of the unsaturated polyester resins were used to determine the Rₐ value according to the following formula: ${R}_{a} = \sqrt{4 ⋅ {\left({δ}_{D 1}-{δ}_{D 2}\right)}^{2} + {\left({δ}_{P 1}-{δ}_{P 2}\right)}^{2} + {\left({δ}_{H 1}-{δ}_{H 2}\right)}^{2}}$

| Mixture of Reactive Diluents | | Hansen Solubility Parameter of Mixture of Reactive Diluents [MPa^{1/2}] | | | Rₐ for Mixture of Reactive Diluents | Solubility in Mixture of Reactive Diluents |
|---|---|---|---|---|---|---|
| Styrene [wt.%] | VMOX^{®} [wt.%] | δ_{d} | δₚ | δₙ | | |
| 70 | 0 | 18.600 | 1.000 | 4.100 | 12.779 | Turbid solution |
| 69 | 1 | 18.592 | 1.095 | 4.121 | 12.721 | Clear solution |
| 68 | 2 | 18.583 | 1.190 | 4.143 | 12.663 | Clear solution |
| 67 | 3 | 18.575 | 1.286 | 4.164 | 12.605 | Clear solution |
| 66 | 4 | 18.567 | 1.382 | 4.186 | 12.548 | Clear solution |
| 65 | 5 | 18.558 | 1.479 | 4.208 | 12.491 | Clear solution |
| 60 | 10 | 18.515 | 1.970 | 4.318 | 12.209 | Clear solution |
| 50 | 20 | 18.426 | 2.990 | 4.548 | 11.675 | Clear solution |
| 40 | 30 | 18.332 | 4.064 | 4.789 | 11.193 | Clear solution |

| Reactive Diluents | | Hansen Solubility Parameter of Mixture of Reactive Diluents [MPa^{1/2}] | | | Rₐ for Mixture of Reactive Diluents | Solubility in Mixture of Reactive Diluents |
|---|---|---|---|---|---|---|
| Styrene [wt.%] | VMOX^{®} [wt.%] | δ_{d} | δₚ | δₙ | | |
| 60 | 0 | 18.600 | 1.000 | 4.100 | 12.779 | Turbid solution |
| 59 | 1 | 18.590 | 1.111 | 4.125 | 12.711 | Turbid solution |
| 58 | 2 | 18.581 | 1.222 | 4.150 | 12.644 | Clear solution |
| 57 | 3 | 18.571 | 1.334 | 4.175 | 12.577 | Clear solution |
| 56 | 4 | 18.561 | 1.447 | 4.200 | 12.510 | Clear solution |
| 55 | 5 | 18.551 | 1.560 | 4.226 | 12.443 | Clear solution |
| 50 | 10 | 18.501 | 2.136 | 4.356 | 12.117 | Clear solution |
| 40 | 20 | 18.395 | 3.342 | 4.627 | 11.507 | Clear solution |
| 30 | 30 | 18.283 | 4.623 | 4.915 | 10.978 | Clear solution |

It is evident that the presence of even small amounts of VMOX^{®} improves the solubility of the examined polyester resin in comparison to pure styrene.

### C-7. Tensile Testing

Curable resin compositions prepared according to C-1 were used to prepare samples for the tensile testing. Before the samples preparation, 0.3 wt.-% of Irganox^{®} 819 and 1 wt.-% tert-butyl peroxybenzoate (TBPB) were added to the curable resin compositions. The samples for the tensile test were prepared by vacuum infusion method.

For this purpose, sealing tape was applied to a glass plate (28 × 17 cm) and provided with two parallel opposing spiral hoses at the lengths. The spiral hoses were pressed firmly to the sealing tape to avoid possible leaks. A vacuum hose was inserted into each spiral hose at about 3 cm depth. The vacuum hose was covered and sealed by small pieces of sealing tape. This construction represented the framework for the vacuum infusion.

Subsequently, six layers of fiberglass fabric (24 × 13 cm, 831 g/m², 0°/90°, item number S14EB490-00831-01300-474000 from Saertex) were placed on the glass plate. The layers were alternately aligned at a 45° angle. A release film (Peel ply 64 g/m² (plain weave) 150 cm, item no. 190181-150-5) and a resin bleed layer (INFUPLEX with ISONET, width 145 cm, item no. 3903426), having the same size as the fabric layers, were applied. The release film provides a smooth surface of the test specimen. The resin bleed layer consisted of a two-layered system: perforated flow and flow aid. This system is permeable to resins and allows a uniform and complete wetting of the laminate through the fine commercial structure. Finally, the mold was firmly sealed with a vacuum foil.

The curable resin compositions were deaerated by a vacuum pump before the infusion process. For the infusion, a shorter vacuum hose was placed in the resin and a longer one was connected to the vacuum circuit. The set up consists of a vacuum pump, a desiccator and an interposed cold trap. The desiccator comprised a collecting vessel for surplus flowing resin. The plates should be produce in the dark place to avoid possible premature curing. As soon as the plate was finally laminated, the vacuum hoses were compressed by means of clamps and then cut off. Next, the plate was photochemically cured in a Xenon tester (Original Hanau, serial number 7011, overall dimensions 700 x 470 x 350 mm, power supply: 220 V / 50 Hz / 1500 W) for 20 min. The laminate was carefully removed from the glass plate and post-cured in a convection oven at 80 °C for 1 hour and at 160 °C for 1 hour to obtain thermosets. The specimens were cut on a CNC machine into four equal-sized test specimens of 200 mm length and 25 mm width.

To evaluate the mechanical properties, tensile tests were performed on a Zwick Z200 in accordance with DIN EN ISO 527-4. For each test, four equally sized test specimens were used. The width and thickness of all specimens were measured with a calliper and documented for the respective test. Each thermoset obtained from the curable resin compositions was tested at room temperature (about 20 °C), at 100 °C and at 120°C. For the measurements at 100 °C and at 120 °C, a climate chamber was connected to the Zwick Z200 and preheated for at least one hour. The samples were heated and clamped into the Zwick Z200 for 10 minutes before the measurement start. It is important to ensure that no shearing forces act when clamping the test specimen. This means that the specimen must be mounted vertically in the clamping jaws. The drafts generated by the oven fan are must be switched off for the duration of the measurement. The Zwick Z200 loads the sample until it finally breaks. The tensile modulus of elasticity (Et), the tensile strength (σₘ) and the elongation at maximum tensile stress (εₘ) were recorded.

The results of the measurements are shown in the table below.

| curable resin composition | measurement temperature [°C] | elasticity Et [MPa] | tensile strength σₘ [MPa] | elongation εₘ [%] |
|---|---|---|---|---|
| 50 wt.-% resin 1-3, 40 wt.-% VMOX^{®}, 10 wt.-% DMI | 20 | 14,300 (± 1,980) | 84.6 (± 0.75) | 1.8 (± 0.34) |
| 50 wt.-% resin 1-3, 50 wt.-% VMOX^{®} | 20 | 10,800 (± 439) | 58.8 (± 3.18) | 1.6 (± 0.28) |
| 50 wt.-% resin 1-3, 40 wt.-% VMOX^{®}, 10 wt.-% DMI | 100 | 10,200 (± 799) | 65.6 (± 3.86) | 2.7 (± 0.35) |
| 50 wt.-% resin 1-3, 50 wt.-% VMOX^{®} | 100 | 7,120 (± 302) | 44.2 (± 2.10) | 2.1 (± 0.22) |
| 50 wt.-% resin 1-3, 40 wt.-% VMOX^{®}, 10 wt.-% DMI | 120 | 7,020 (± 642) | 55.3 (± 2.31) | 3.7 (± 0.30) |
| 50 wt.-% resin 1-3, 50 wt.-% VMOX^{®} | 120 | 6,660 (± 349) | 41.7 (± 1.22) | 2.0 (± 0.27) |

All thermosets obtained from the curable resin compositions showed sufficient mechanical properties. Notably, the use of dimethyl itaconate (DMI) as a further reactive diluent was found to improve the mechanical properties as compared to VMOX^{®} itself. Without wishing to be bound by theory, DMI, in addition to the unsaturated polyester resin 1-3, may act as a copolymerization partner for VMOX. Therefore, radical copolymerization may occur between the unsaturated polyester resin and VMOX, as well as between DMI and VMOX. The copolymerization between VMOX and DMI increases the possibility of formation of reactive diluent bridges between chains of the unsaturated polyester resin, thus increasing the crosslink density and homogeneity of the network.

### D. Composite Glass Fiber Materials

### D-1. Dynamic Mechanical Analysis

Glass fiber reinforced test specimens were fabricated using the resin compositions of item C-1, comprising 70 wt.-% of VMOX^{®}. As a first step, tert-butyl peroxybenzoate (Acros Organics, 98%) was added to the resin in an amount of 1 wt.-%. Then, approximately 10 g of the resin were placed in a metal dish (diameter: 10 cm; depth: 1 cm). The resin was evenly distributed, and a layer of biaxial fiberglass fabric (831 g/m², 0°/90°, item number S14EB490-00831-01300-474000 from Saertex) of the same diameter was placed in the resin. Once all air bubbles had been removed using a wooden spatula, the second layer of resin was added. A second fiberglass fabric layer was placed at an angle of 90° to the first layer and also wetted with resin. This process was repeated once again so that the metal dish contained three layers of glass fiber at 90° to each other and about 30 g of resin composition.

The obtained specimen was weighted down with a weight (about 500 grams) wrapped in aluminum foil so as to squeeze excess resin composition out of the mold and so as to obtain a smooth specimen surface. Finally, the specimen and weight were wrapped in aluminum foil. The specimen was thermally cured for 1 h at 100 °C and for 1 h at 160 °C in a laboratory oven under air. After cooling, the obtained composite glass fiber material was broken out of its mold and cut into samples of 10 × 50 mm using a table saw.

Subsequently, the samples were subjected to Dynamic Mechanical Analysis (DMA) using a DMA 242 C from Netzsch. A three-point bending specimen holder was used. The samples were measured according to the method specified in the table below, under a nitrogen flow of 83 mL/min. The dependencies of storage modulus, loss modulus and loss factor (tan δ) of the cured ethylenically unsaturated polyester resin compositions on temperature were determined. The maximum value of the tan δ curve (T) was considered to constitute the glass transition temperature T_{g}.

| | | |
|---|---|---|
| temperature program | Start | |
| | temperature | 30 °C |
| | frequency | 5.00 Hz |
| | Dynamic Load | |
| | temperature | 250 °C |
| | heating rate | 2.0 K/min |
| | frequency | 10.00 Hz |
| mechanical parameters | proportionality | 1.1 |
| | maximum amplitude | 30.00 µm |
| | maximum dynamic force on the sample | 7.2 N |

The glass transition temperatures T_{g} of the composite glass fiber materials are shown in the following table.

| # | Unsaturated Polyester Resin (molar ratio of reactants) | T_{g} |
|---|---|---|
| 1-1 | maleic anhydride - phthalic anhydride - propylene glycol (1.0 : 2.0 : 3.3) | 144 °C |
| 1-2 | maleic anhydride - phthalic anhydride - propylene glycol (1.0 : 0.5 : 1.65) | 166 °C |
| 1-3 | maleic anhydride - propylene glycol - neopentyl glycol (1.0 : 0.93 : 0.20) | 195°C |
| 1-4 | maleic anhydride - tetrahydrophthalic anhydride - diethylene glycol (1.0 : 0.5 :1.59) | 142 °C |

### D-2. Impact Test

Composite material test specimens were fabricated using resin compositions derived from unsaturated resin 1-3 in accordance with item C-1, comprising 60 wt.-% of either VMOX^{®} or styrene. Tinuvin^{®} 765 (1,000 ppmw) was added as stabilizer so as to suppress gelation. Chopped glass fibers (HP-GS3, HP-Textiles) having a fiber length of 3 mm and a diameter of 13 µm (length-to-diameter ratio: 231) or talc (finely powdered Mg₃[(OH)₂|Si₄O₁₀] from Merck, 30-0050) were used. The density of both materials was approximately the same, namely 2.4 to 2.8 g/cm³.

A cobalt accelerator (BÜFA^{®}-Accelerator Co 1, Büfa Chemicals) was added to 400 g of each curable resin composition using a round wheel stirrer at a speed of approximately 750 rpm. Subsequently, methyl ethyl ketone peroxide (MEKP, United Initiators) was added and mixed with the curable resin composition using a wooden spatula. For curable resin compositions comprising styrene, 1.25 wt.-% of each of the cobalt accelerator and MEKP were used. For curable resin compositions comprising VMOX^{®}, 0.5 wt.-% of each of the cobalt accelerator and MEKP were used.

Finally, 10 wt.-% of chopped glass fibers or talc as described above were added and mixed into the curable resin compositions for 120 s at 750 rpm. After mixing, each curable resin composition was divided into three metal dishes (diameter: 100 cm) so that the resin was evenly distributed each dish was filled to a height of 10 to 12 mm. Using a desiccator at a pressure of 10 mbar, air bubbles were removed from the compositions during cold curing at room temperature. After cold curing of the compositions was finished (approximately 1 h), the specimens were thermally cured for 8 h at 80 °C.

The cured composite material test specimens were taken out of the metal dishes and cut to size on a CNC cutting machine. Test rods having a width of approximately 8 mm, a height of approximately 4 mm and a length of approximately 80 mm were obtained for each composite material.

Impact tests were carried out with an impact testing device from Zwick. The impact pendulum had an energy of 0.5 joules. Before the impact test, the width and height of each test rod was determined using a caliper gauge. The test specimens were placed in the impact tester so that the impact pendulum centrally struck one of the narrow sides, i.e., one of the face sides with an area which may be defined as length × height.

The impact strength was determined using the following formula: ${a}_{C} U = \frac{{W}_{C}}{h ∗ b} ∗ {10}^{3}$ wherein a_{C}U is the impact strength in kJ/m², W_{C} is the impact energy in J, h is the height of the specimen, and b is the width of the specimen. The results are shown in the following tables.

**Table D-2-1: Composite Material Specimens Derived from VMOX^{®} and Talc.**

| Specimen | Impact Work W_{C} [J] | Height h [mm] | Width b [mm] | Impact Strength a_{C}U [kJ/m²] |
|---|---|---|---|---|
| 1 | 0.055 | 3.92 | 7.26 | 1.93 |
| 2 | 0.050 | 3.80 | 7.84 | 1.68 |
| 3 | 0.080 | 3.74 | 7.92 | 2.70 |
| 4 | 0.085 | 4.08 | 7.95 | 2.62 |
| 5 | 0.050 | 3.86 | 7.73 | 1.68 |
| 6 | 0.055 | 3.95 | 7.46 | 1.87 |
| 7 | 0.055 | 3.90 | 7.78 | 1.81 |
| 8 | 0.065 | 3.78 | 7.40 | 2.32 |
| 9 | 0.065 | 3.87 | 8.02 | 2.09 |
| 10 | 0.070 | 3.95 | 7.33 | 2.42 |
| 11 | 0.065 | 3.96 | 7.44 | 2.21 |
| 12 | 0.090 | 4.03 | 7.55 | 2.96 |
| 13 | 0.085 | 4.05 | 7.90 | 2.66 |
| 14 | 0.065 | 4.04 | 7.84 | 2.05 |
| 15 | 0.100 | 3.92 | 7.86 | 3.25 |
| 16 | 0.090 | 3.87 | 8.11 | 2.87 |
| 17 | 0.060 | 3.97 | 7.35 | 2.06 |
| 18 | 0.060 | 4.05 | 8.06 | 1.84 |
| | | | Average | 2.28 |
| | | | Standard Deviation | 0.46 |

**Table D-2-2: Composite Material Specimens Derived from VMOX^{®} and Glass Fibers.**

| Specimen | Impact Work W_{C} [J] | Height h [mm] | Width b [mm] | Impact Strength a_{C}U [kJ/m²] |
|---|---|---|---|---|
| 1 | 0.110 | 4.07 | 8.42 | 3.21 |
| 2 | 0.090 | 3.89 | 8.49 | 2.73 |
| 3 | 0.135 | 3.79 | 8.70 | 4.09 |
| 4 | 0.080 | 3.98 | 8.68 | 2.32 |
| 5 | 0.105 | 3.87 | 8.71 | 3.12 |
| 6 | 0.135 | 3.82 | 7.93 | 4.46 |
| 7 | 0.105 | 4.06 | 8.60 | 3.01 |
| 8 | 0.135 | 3.90 | 8.68 | 3.99 |
| 9 | 0.125 | 4.04 | 8.53 | 3.63 |
| 10 | 0.140 | 4.02 | 7.92 | 4.40 |
| 11 | 0.140 | 3.98 | 8.07 | 4.32 |
| 12 | 0.090 | 3.93 | 8.66 | 2.64 |
| 13 | 0.095 | 4.03 | 7.93 | 2.97 |
| 14 | 0.100 | 4.04 | 7.88 | 3.14 |
| 15 | 0.125 | 4.01 | 8.49 | 3.67 |
| 16 | 0.130 | 4.06 | 8.72 | 3.67 |
| | | | Average | 3.46 |
| | | | Standard Deviation | 0.64 |

**Table D-2-3: Composite Material Specimens Derived from Styrene and Glass Fibers.**

| Specimen | Impact Work W_{C} [J] | Height h [mm] | Width b [mm] | Impact Strength a_{C}U [kJ/m²] |
|---|---|---|---|---|
| 1 | 0.080 | 4.14 | 7.61 | 2.54 |
| 2 | 0.160 | 4.15 | 8.73 | 4.42 |
| 3 | 0.080 | 4.22 | 7.69 | 2.47 |
| 4 | 0.070 | 4.04 | 8.39 | 2.07 |
| 5 | 0.110 | 4.17 | 8.00 | 3.30 |
| 6 | 0.095 | 4.15 | 8.02 | 2.85 |
| 7 | 0.080 | 4.31 | 7.60 | 2.44 |
| 8 | 0.055 | 4.31 | 8.54 | 1.49 |
| 9 | 0.055 | 4.00 | 8.50 | 1.62 |
| 10 | 0.080 | 4.25 | 8.49 | 2.22 |
| 11 | 0.085 | 4.07 | 8.38 | 2.49 |
| 12 | 0.080 | 4.09 | 8.11 | 2.41 |
| 13 | 0.080 | 4.23 | 8.02 | 2.36 |
| 14 | 0.145 | 4.01 | 8.20 | 4.41 |
| 15 | 0.080 | 4.10 | 8.29 | 2.35 |
| 16 | 0.090 | 3.89 | 8.22 | 2.81 |
| 17 | 0.065 | 4.17 | 8.38 | 1.86 |
| | | | Average | 2.59 |
| | | | Standard Deviation | 0.79 |

**Table D-2-4: Summary of the Impact Strength Tests**

| | Average Impact Strength a_{C}U [kJ/m²] | Standard Deviation |
|---|---|---|
| VMOX^{®} and Talc | 2.28 | 0.46 |
| VMOX^{®} and Glass Fibers | 3.46 | 0.64 |
| Styrene and Glass Fiber | 2.59 | 0.79 |

It is evident that composite materials derived from glass fibers have higher impact strength than talc-based composite materials. Moreover, it is evident that composite glass fiber material derived from N-vinyloxazolidinones of formula (I) have higher impact strength than styrene-based composite glass fiber materials. Furthermore, N-vinyloxazolidinones of formula (I) require less initiator for cold curing than styrene.

## Claims

1. A curable resin composition comprising
(i) an ethylenically unsaturated resin; and
(ii) a reactive diluent, which is an N-vinyloxazolidinone of formula (I) 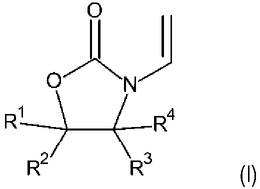 in which R¹, R², R³ and R⁴ are independently from one another selected from a hydrogen atom and an organic moiety comprising 1 to 10 carbon atoms;
wherein the reactive diluent (ii) is present in an amount of at least 0.5 wt-% relative to the total amount of reactive diluent (ii) and further reactive diluents;
and wherein the ethylenically unsaturated resin (i) is selected from an ethylenically unsaturated polyester resin, a vinyl ester resin, and combinations thereof.

2. The curable resin composition according to claim 1, wherein
- at least two of R¹, R², R³ and R⁴, for example each of R¹, R², R³ and R⁴, are a hydrogen atom; or
- R¹ is a C₁-C₄ alkyl group and R², R³ and R⁴ are a hydrogen atom; or
- R⁴ is a C₁-C₄ alkyl group and R¹, R² and R³ are a hydrogen atom; or
- R¹ and R² are a hydrogen atom and R³ and R⁴ are a C₁-C₄ alkyl group.

3. The curable resin composition according to any one of the preceding claims, wherein the N-vinyloxazolidinone of formula (I) is 3-vinyloxazolidin-2-one, 4-methyl-3-vinyl-oxazolidin-2-one or 5-methyl-3-vinyl-oxazolidin-2-one, in particular 5-methyl-3-vinyl-oxazolidin-2-one.

4. The curable resin composition according to any one of the preceding claims, wherein the weight ratio of the ethylenically unsaturated resin (i) to the total amount of reactive diluents in the curable resin composition is in the range of 15 : 85 to 85 : 15, more preferably in the range of 25 : 75 to 75 : 25, in particular 30 : 70 to 70 : 30 or 30 : 70 to 60 : 40.

5. The curable resin composition according to any one of the preceding claims, wherein the ethylenically unsaturated resin (i) has at least one of the following features:
- a number average molecular weight, as determined by gel permeation chromatography, in the range of 500 to 10,000 g/mol;
- an acid value in the range of 5 to 80 mg KOH/g, as determined via titration according to DIN EN ISO 2114; and
- a hydroxyl value in the range of 5 to 80 mg KOH/g, as determined via titration according to DIN EN ISO 4692-2.

6. The curable resin composition according to any one of the preceding claims, wherein the ethylenically unsaturated resin (i) has an ethylene group density in the range of 0.5 to 10 mol/kg, in particular in the range of
- 2.0 to 9.0 mol/kg, when the ethylenically unsaturated resin (i) is an ethylenically unsaturated polyester resin;
- 1.0 to 4.5 mol/kg, when the ethylenically unsaturated resin (i) is a vinyl ester resin;
wherein the ethylene group density signifies the molar proportion of ethylene groups per kg of resin, as determined via nuclear magnetic resonance spectroscopy.

7. The curable resin composition according to any one of the preceding claims, wherein the curable resin composition comprises the ethylenically unsaturated resin (i) in an amount of 15 to 85 wt.-% based on the total weight of the curable resin composition, more preferably 15 to 75 wt.-%, most preferably 20 to 60 wt.-%.

8. The curable resin composition according to any one of the preceding claims, wherein the curable resin composition comprises one or more further reactive diluents selected from styrene and styrene derivatives, epoxides, vinyl ethers, acrylates and methacrylates.
